(19) **Europäisches Patentamt**
**European Patent Office**
**Office européen des brevets**

(11) **EP 3 494 688 B1**

(12) # EUROPEAN PATENT SPECIFICATION

(45) Date of publication and mention
of the grant of the patent:
**10.06.2020 Bulletin 2020/24**

(51) Int Cl.:
***H04L 29/12*** *(2006.01)*

(21) Application number: **17839877.2**

(86) International application number:
**PCT/KR2017/008791**

(22) Date of filing: **11.08.2017**

(87) International publication number:
**WO 2018/030860 (15.02.2018 Gazette 2018/07)**

(54) **ELECTRONIC DEVICE AND METHOD FOR DOMAIN NAME RESOLUTION**

ELEKTRONISCHE VORRICHTUNG UND VERFAHREN FÜR RESOLUTION VON DOMAIN NAMEN

DISPOSITIF ÉLECTRONIQUE ET PROCÉDÉ POUR LA RÉSOLUTION DES NOMS DE DOMAINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2016 KR 20160102380**

(43) Date of publication of application:
**12.06.2019 Bulletin 2019/24**

(73) Proprietor: **Samsung Electronics Co., Ltd.**
**Suwon-si, Gyeonggi-do 16677 (KR)**

(72) Inventors:
• **LEE, Wonbo**
**Suwon-si**
**Gyeonggi-do 16700 (KR)**
• **HONG, Young Ki**
**Seoul 08357 (KR)**
• **KANG, Hyeon-Jin**
**Seoul 06764 (KR)**

(74) Representative: **Gulde & Partner**
**Patent- und Rechtsanwaltskanzlei mbB**
**Wallstraße 58/59**
**10179 Berlin (DE)**

(56) References cited:
**US-A1- 2010 049 872     US-A1- 2011 153 867**
**US-A1- 2012 084 343     US-A1- 2014 195 604**
**US-A1- 2015 058 488     US-A1- 2015 195 243**
**US-B1- 8 463 915**

• **COHEN E ET AL: "Proactive caching of DNS records: addressing a performance bottleneck", PROCEEDINGS OF SAINT 2001 SYMPOSIUM ON APPLICATIONS AND THE INTERNET; 8 - 12 JANUARY 2001; SAN DIEGO, CA, USA, IEEE COMPUTER SOCIETY, LOS ALAMITOS, CA, USA, 8 January 2001 (2001-01-08), pages 85-94, XP010532801, DOI: 10.1109/SAINT.2001.905171 ISBN: 978-0-7695-0942-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present disclosure generally relates to an electronic device, and more particularly to an electronic device for accessing the Internet, and a method thereof.

## Background Art

In order to meet the demand for wireless data traffic, which has been increasing since the commercialization of a fourth-generation (4G) communication system, efforts are being made to develop an improved fifth-generation (5G) communication system or pre-5G communication system. For this reason, a 5G communication system or pre-5G communication system is referred to as a "beyond-4G-network communication system" or "post-long-term evolution (LTE) system." To achieve a high data transmission rate, implementing a 5G communication system in an extremely high frequency (mmwave) band (for example, a 60 GHz band) is being considered. To relieve the path loss of signals and to increase the transmission distance of signals in an extremely high frequency band, beamforming, massive multiple-input and multiple-output (massive MIMO), full dimensional MIMO (FD-MIMO), array antenna, analog beamforming, and large-scale antenna techniques are under discussion for a 5G communication system. Further, to improve the network of the system, technical development in an evolved small cell, an advanced small cell, a cloud radio access network (cloud RAN), an ultra-dense network, device-to-device (D2D) communication, wireless backhaul, a moving network, cooperative communication, coordinated multi-points (CoMP), and interference cancellation is progressing for the 5G communication system. In addition, an advanced coding modulation (ACM) scheme including hybrid frequency shift keying (FSK) and quadrature amplitude modulation (FQAM) and sliding window superposition coding (SWSC) and an advanced access technique including filter bank multi carrier (FBMC), non-orthogonal multiple access (NOMA), and sparse code multiple access (SCMA) are being developed in the 5G system.

Meanwhile, the Internet is evolving from a human-centered network, in which human beings generate and consume information, to an internet of things (IoT) network, in which distributed components including things exchange and process information. Internet-of-everything (IoE) technology, as a combination of big-data processing technology with IoT technology through connection via a cloud server, has also emerged. To implement IoT, technical elements including sensing techniques, wired/wireless communication and network infrastructures, service interface techniques, and security techniques are used. Accordingly, technologies for sensor networks, machine-to-machine (M2M), and machine-type communication (MTC) are being studied in order to connect things. In an IoT environment, intelligent internet technology (IT) services may be provided which collect and analyze data generated from connected things to create new value in human lives. The IoT may be applied to the areas of a smart home, a smart building, a smart city, a smart car or connected car, a smart grid, health care, smart home appliances, and advanced medical care services through combination and integration of existing information technology (IT) technologies with diverse industries.

Accordingly, various attempts are being made to apply a 5G communication system to an IoT network. For example, 5G communication technologies including sensor network, M2M, and MTC technologies are implemented by beamforming, MIMO, and array antenna techniques. Applying a cloud radio access network as a big-data processing technology is one example of a combination of 5G technology and IoT technology.

With the development of communication technology, methods for conveniently using the Internet are becoming popular. For example, in order to conveniently use the Internet, a method of accessing the Internet using a domain name set with a combination of characters is proliferating among users. The method of accessing the Internet using the domain name may provide convenience to a user but utilizes an additional procedure, such as a procedure for obtaining an internet protocol (IP) address based on the domain name. That is, the method of accessing the Internet using the domain name may cause a delay. Accordingly, methods for reducing such a delay are being sought.

US 2015/195243 A1 discloses a method for DNS pre-resolution by initiating a DNS lookup call for one or more sub-resource uniform resource locator (URL) hostnames associated with a referring URL prior to navigation to the referring URL.

US 2012/084343 A1 relates to a method and system for performing domain name service (DNS) prefetching, content pre-fetching, or a combination thereof, for a wireless portable computing device (PCD).

COHEN E ET AL: "Proactive caching of DNS records: addressing a performance bottleneck", PROCEEDINGS OF SAINT 2001 SYMPOSIUM ON APPLICATIONS AND THE INTERNET; 8 - 12 JANUARY 2001; SAN DIEGO, CA, USA, IEEE COMPUTER SOCIETY, LOS ALAMITOS, CA, USA, 8 January 2001 (2001-01-08), pages 85-94, XP010532801, discloses different enhancements to passive caching that reduce the fraction of HTTP connection establishments that are delayed by slow DNS resolutions: (A) Renewal policies refresh selected expired cached entries by issuing unsolicited queries and (B) Simultaneous-validation transparently uses expired records.

## Disclosure of Invention

### Technical Problem

To address the above-discussed deficiencies, it is a primary object to provide an electronic device for reducing a delay caused by a method of accessing the Internet using a domain name, and a method thereof.

### Solution to Problem

An electronic device according to various exemplary embodiments of the present disclosure may include: a processor; a sensor configured to be operatively coupled to the processor; a communication unit configured to be operatively coupled to the processor; and a storage unit configured to be operatively coupled to the processor, wherein the processor may be configured to: detect a first input with respect to a first domain name; detect a second input with respect to a second domain name within a designated interval after the first input is detected; store the second domain name as a domain name associated with the first domain name in a storage unit included in the electronic device, in response to detection of the second input; and perform control to transmit a message for requesting information on an address corresponding to the first domain name and a message for requesting information on an address corresponding to the second domain name to a domain name system (DNS) server in response to detection of a third input with respect to the first domain name.

A method of an electronic device according to various exemplary embodiments of the present disclosure may include: detecting a first input with respect to a first domain name; detecting a second input with respect to a second domain name within a designated interval after the first input is detected; storing the second domain name as a domain name associated with the first domain name in a storage unit included in the electronic device, in response to detection of the second input; and transmitting a message for requesting information on an address corresponding to the first domain name and a message for requesting information on an address corresponding to the second domain name to a DNS server in response to detection of a third input with respect to the first domain name.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

The invention is defined by the appended claims.

### Advantageous Effects of Invention

An electronic device and a method thereof according to various exemplary embodiments of the present disclosure may perform not only a DNS query about an input domain name but also a DNS query about a domain name associated with the input domain name, thereby reducing a delay caused by an Internet access method using a domain name.

Effects which can be acquired by the present disclosure are not limited to the above described effects, and other effects that have not been mentioned may be clearly understood by those skilled in the art from the following description.

### Brief Description of Drawings

For a more complete understanding of the present disclosure and its advantages, reference is now made to the following description taken in conjunction with the accompanying drawings, in which like reference numerals represent like parts:

FIG. 1 illustrates an example of a network structure for accessing the Internet according to various exemplary embodiments of the present disclosure;

FIG. 2 illustrates an example of signal flow between an electronic device accessing the Internet using a domain name, a DNS server, and a content server according to various exemplary embodiments of the present disclosure;

FIG. 3 illustrates an example of DNS signaling according to various exemplary embodiments of the present disclosure;

FIG. 4 illustrates an example of parallel DNS signaling according to various exemplary embodiments of the present disclosure;

FIG. 5 illustrates an example of signal flow between an electronic device performing parallel DNS signaling, a DNS server, and a content server according to various exemplary embodiments of the present disclosure;

FIG. 6 illustrates an example of operation flow of an electronic device that controls information on a domain name for parallel DNS signaling according to various exemplary embodiments of the present disclosure;

FIG. 7A illustrates an example of operation flow of an electronic device that stores information on a domain name by time interval for parallel DNS signaling according to various exemplary embodiments of the present disclosure;

FIG. 7B illustrates an example of signal flow between an electronic device adaptively performing parallel DNS signaling and a DNS server according to various exemplary embodiments of the present disclosure;

FIG. 8 illustrates another example of operation flow of an electronic device that controls information on a domain name stored for parallel DNS signaling according to various exemplary embodiments of the present disclosure;

FIG. 9A illustrates an example of operation flow of an electronic device that stores information on a domain name by user for parallel DNS signaling according to various exemplary embodiments of the present disclosure;

FIG. 9B illustrates another example of signal flow between an electronic device adaptively performing parallel DNS signaling and a DNS server according to various exemplary embodiments of the present disclosure;

FIG. 10 illustrates another example of signal flow between an electronic device performing parallel DNS signaling and a DNS server according to various exemplary embodiments of the present disclosure;

FIG. 11A illustrates another example of signal flow between an electronic device performing parallel DNS signaling and a DNS server according to various exemplary embodiments of the present disclosure;

FIG. 11B illustrates an example of signal flow between an electronic device performing parallel DNS signaling, a proxy server, and a DNS server according to various exemplary embodiments of the present disclosure;

FIG. 12 illustrates an example of a functional configuration of an electronic device according to various exemplary embodiments of the present disclosure;

FIG. 13A illustrates an example of a functional configuration included in a storage unit in an electronic device according to various exemplary embodiments of the present disclosure; and

FIG. 13B illustrates another example of a functional configuration included in a storage unit in an electronic device according to various exemplary embodiments of the present disclosure.

## Best Mode for Carrying out the Invention

Before undertaking the description below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

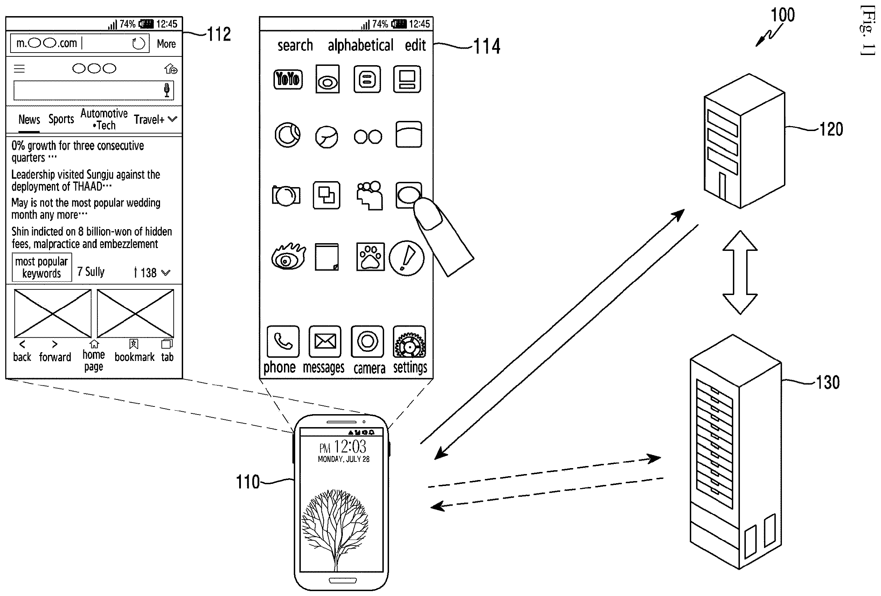

FIGS. 1 through 13B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, in various embodiments of the present disclosure, hardware approaches will be described as an example. However, various embodiments of the present disclosure include a technology that uses both hardware and software and thus, the various embodiments of the present disclosure may not exclude the perspective of software.

The internet provides users with information through various types of servers. These servers may be distinguished from each other through an internet protocol (IP) address. However, an IP address is set as a combination of a plurality of numbers and thus may have low accessibility. To compensate for the low accessibility of the IP address, a method of accessing the Internet using a domain name is widely used.

Here, a domain name may have a unique address (for example, an IP address or the like) to indicate a specific host (or server) on the Internet. Further, the domain name may be set with a word having a meaning or with a combination of words. Since the domain name is set with a word having a meaning or with a combination of words, a user using the domain name may easily and intuitively access the Internet.

In addition, the domain name may be data (or a sequence) processed based on a domain name (or a host name) recognizable by a user for a domain name system (DNS) query. Depending on exemplary embodiments, the domain name may be set to be the same as or different from the domain name (or the host name) recognizable by the user.

However, the method of accessing the internet using the domain name may compensate for the low accessibility of an IP address but may utilize an additional procedure, such as a DNS query procedure. The DNS query procedure is an additional procedure and thus may cause a delay. This delay may reduce the speed of Internet access, thus decreasing user convenience.

Therefore, the present disclosure proposes a new DNS query procedure that is capable of reducing a delay.

The term "domain name" used in the present disclosure refers to a combination of characters corresponding to the IP address of a host or domain and is a concept including a domain name, a host name, a fully qualified domain name (FQDN), or the like.

FIG. 1 illustrates an example of a network structure for accessing the Internet according to various exemplary embodiments of the present disclosure.

Referring to FIG. 1, a network 100 may include an electronic device 110, a DNS server 120, and a content server 130.

The electronic device 110 may be a device that is portable. For example, the electronic device 110 may be a mobile phone, a smart phone, a music player, a portable game console, a navigation system, a laptop computer, or the like. When the electronic device 110 is a device that is portable, the electronic device 110 may also be referred to as a mobile station, a terminal, a station (STA), user equipment, or the like.

The electronic device 110 may be a fixed device. For example, the electronic device 110 may be a desktop computer, a video game console, a smart television (TV), a household electronic device with a communication function (for example, a refrigerator, a boiler, or the like), a mirror display, or the like.

The electronic device 110 may communicate with another electronic device or another entity. For example, the entity may be various types of servers (for example, the DNS server 120, the content server 130, or the like). In another example, the entity may be a base station that provides a cellular communication service. In another example, the entity may be an access point (AP) that provides a wireless local area network (WLAN) service. In some exemplary embodiments, the electronic device 110 may communicate with the other electronic device or entity through a wired communication path. In other exemplary embodiments, the electronic device 110 may communicate with the other electronic device or entity through a wireless communication path. The wireless communication path may be a wireless-fidelity (Wi-Fi) path. The wireless communication path may also be a cellular communication path. Further, the wireless communication path may be a path for proximity communication, such as bluetooth or bluetooth low energy (BLE).

The DNS server 120 may be a device that provides another entity (for example, the electronic device 110 or the like) with information on an address (for example, an IP address) corresponding to a domain name set with a combination of characters. Here, the address may have various formats. For example, the address may have an internet protocol version 4 (IPv4) format or an IPv6 format. Specifically, the DNS server 120 may receive a DNS query message from the electronic device 110. The DNS query message may include information on the entity or part of a domain name. The DNS server 120 may transmit, to the electronic device 110, a DNS response message including information on an address (for example, an IP address) corresponding to the information on the domain name included in the received DNS query message.

The DNS server 120 may be provided with information on an address corresponding to a domain name from the content server 130 in order to provide the information on the address corresponding to the queried domain name to the electronic device 110. Further, the DNS server 120 may be further provided with information on an available period of the address provided from the content server 130. The available period may be a parameter indicating the period during which the address is available. The available period may be a parameter indicating how long the DNS server 120 retains the address as cached information. For example, the information on the available period may include information on time-to-live (TTL).

Although FIG. 1 shows the DNS server 120 as a single entity, which is for illustrative purposes only, the DNS server 120 illustrated in FIG. 1 may be configured as an aggregation of a plurality of DNS servers. For example, the DNS server 120 may be configured as an aggregation of a plurality of local DNS servers and/or higher DNS servers (for example, root DNS servers, mirror servers, or the like). When the DNS server 120 is configured as an aggregation of a plurality of DNS servers, the DNS server 120 may determine information on an address corresponding to a domain name requested by another entity through information exchange between the plurality of DNS servers and may provide the information on the address to the other entity.

The content server 130 may be a server that provides various types of information to another entity (for example, the electronic device 110 or the like). For example, the content server 130 may be a server that provides a portal service. In another example, the content server 130 may be a server that provides an Internet shopping service. In another example, the content server 130 may be a server that provides a video streaming service or a sound streaming service. In yet another example, the content server 130 may be a server that provides a game service. In another example, the content server 130 may be a server that provides a social networking service (SNS).

Specifically, the content server 130 may receive a message for requesting data from the other entity. The content server 130 may transmit a message including data requested by the received message to the other entity.

The content server 130 may provide information on an address corresponding to a domain name to the DNS server 120 so that the DNS server 120 provides the information on the address corresponding to the queried domain name to the electronic device 110. In addition, the content server 130 may further provide the DNS server 120 with information on an available period of the provided address. For example, the information on the available period may include TTL information.

A procedure for accessing the Internet using a domain name may be performed as follows. The electronic device 110 may detect a uniform resource locator (URL), "m.navee.com," which a user directly inputs into a web page, as in a user interface (UI) 112, or may detect a URL that is automatically accessed when a user runs an application, as in a UI 114. The electronic device 110 may identify a domain name (for example, "m.navee.com" in the UI 112) in the detected URL.

The electronic device 110 may transmit a DNS query message including information on the identified domain name to the DNS server 120. The DNS server 120 may receive the DNS query message including the information on the identified domain name from the electronic device 110. The DNS server 120 may identify an address corresponding to the identified domain name. The DNS server 120 may transmit a DNS response message including information on the identified address to the electronic device 110. The DNS response message may further include information on an available period of the identified address. The electronic device 110 may receive the DNS response message including the information on the identified address from the DNS server 120. Here, a process in which the electronic device 110 transmits the DNS query message to the DNS server and a process in which the electronic device 110 receives the DNS response message from the DNS server may collectively be referred to as DNS signaling.

The electronic device 110 may acquire information for identifying a server that the electronic device 110 desires to access through the received DNS response message. For example, the electronic device 110 may acquire information on an IP address of the content server 130 through the received DNS response message. The electronic device 110 may transmit a message for requesting data to the content server 130 using the acquired IP address. That is, the electronic device 110 may transmit a message for requesting data to the content server 130 indicated by the acquired address. The data may include information on a service to be provided from the content server 130. The content server 130 may receive the message for requesting the data from the electronic device 110.

The content server 130 may transmit a message (that is, a data response message) including the data requested by the electronic device 110 to the electronic device 110. The electronic device 110 may receive the data response message from the content server 130.

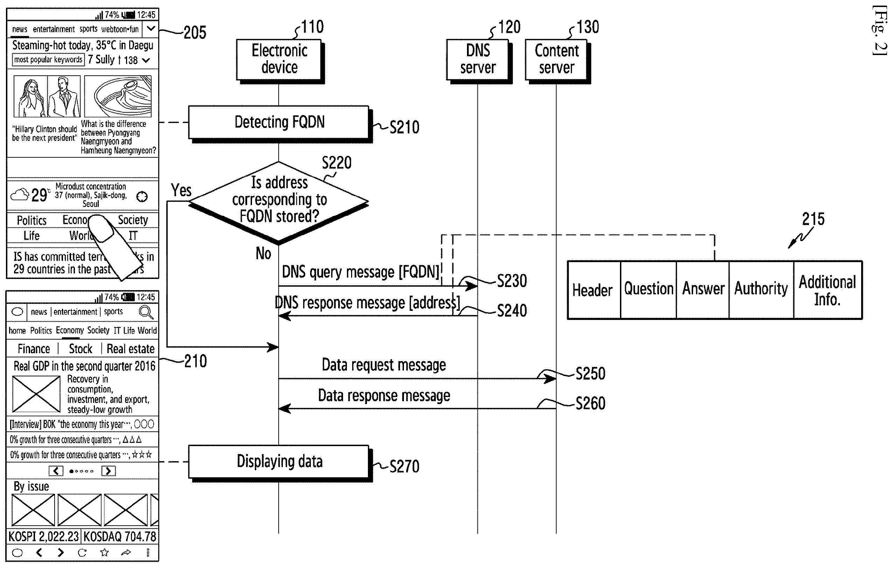

FIG. 2 illustrates an example of signal flow between an electronic device accessing the Internet using a domain name, a DNS server, and a content server according to various exemplary embodiments of the present disclosure.

Referring to FIG. 2, the electronic device 110 may detect a domain name in operation S210. The detection of the domain name may be caused by input into a web page displayed on the electronic device 110, such as a UI 205. The electronic device 110 may detect the domain name within a URL identified by the input.

In operation S220, the electronic device 110 may determine whether an address corresponding to the detected domain name is stored in the electronic device 110. When the electronic device 110 has previously accessed a server indicated by the domain name, the electronic device 110 may store the address during an available period (for example, TTL or the like) of the address. When the address is stored, the electronic device 110 already recognizes information on an address of the server indicated by the domain name, and thus does not need to perform DNS signaling. That is, when the address corresponding to the detected domain name is stored in the electronic device 110, the electronic device 110 may perform operation S250, without needing to perform operation S230 and operation S240. However, when the address is not stored in the electronic device 110, the electronic device 110 needs to perform DNS signaling in order to acquire the information on the address of the server indicated by the domain name. That is, when the address corresponding to the detected domain name is not stored in the electronic device 110, the electronic device 110 may perform an operation in operation S230.

In operation S230, the electronic device 110 may transmit a DNS query message including information on the detected domain name to the DNS server 120. The electronic device 110 may transmit the DNS query message to the DNS server 120 in order to acquire the address of the server indicated by the domain name. The DNS server 120 may receive the DNS query message from the electronic device 110.

In operation S240, the DNS server 120 may transmit a DNS response message including the information on the address corresponding to the domain name in response to the received DNS query message. In some exemplary embodiments, the DNS response message may further include information on the available period (for example, TTL) of the address.

The DNS query message and the DNS response message may each be set with a format 215. For example, the DNS query message and the DNS response message may each include a header section, a question section, an answer section, an authority section, and an additional information section.

The header section may include an ID field for identifying whether a question and an answer correspond to each other, flag fields for defining a property of a query, a QDCount field for indicating the number of question sections, an ANCount field for indicating the number of answer sections, an NSCount field for indicating the number of authority sections, and/or an ARCount field for indicating the number of additional information sections. For example, the header section may have a 12-byte size.

The question section may include a name field including information on the detected domain name, a type field for indicating a question type, and/or a class field for indicating the class type of a network. The question section may have a variable length.

The answer section may include the name field, the type field, the class field, a TTL field for indicating how long the information on the address is retained as cached information in the DNS server 120, an RDlength field for indicating the length of Rdata, and/or an Rdata field including the information on the address.

The authority section and the additional information section may have the same structure as the answer section. The authority section may be used when the DNS server 120 directly provides a response to a queried domain name, and the additional information section may be used when a response to a queried domain name is provided from another DNS server.

In operation S250, the electronic device 110 may transmit a data request message to the content server 130. The electronic device 110 may identify the address of the content server 130 using the information on the address included in the received DNS response message. The electronic device 110 may transmit a message for requesting data to the content server 130 using the identified address. The content server 130 may receive the message for requesting the data from the electronic device 110.

In operation S260, the content server 130 may transmit a data response message to the electronic device 110. The content server 130 may transmit a message including information on data to the electronic device 110 in order to provide the electronic device 110 with a service requested by the electronic device 110. The electronic device 110 may receive the message including the information on the data from the content server 130.

In operation S270, the electronic device 110 may display the received data on a UI 210. The UI 210 may be a UI displaying a response to the input on the web page in operation S210. Although operation S270 shows a process in which the electronic device 110 displays the received data, the electronic device 110 may perform an operation of storing the data, an operation of reprocessing the data, and an operation of processing the data, instead of operation S270, depending on the embodiment.

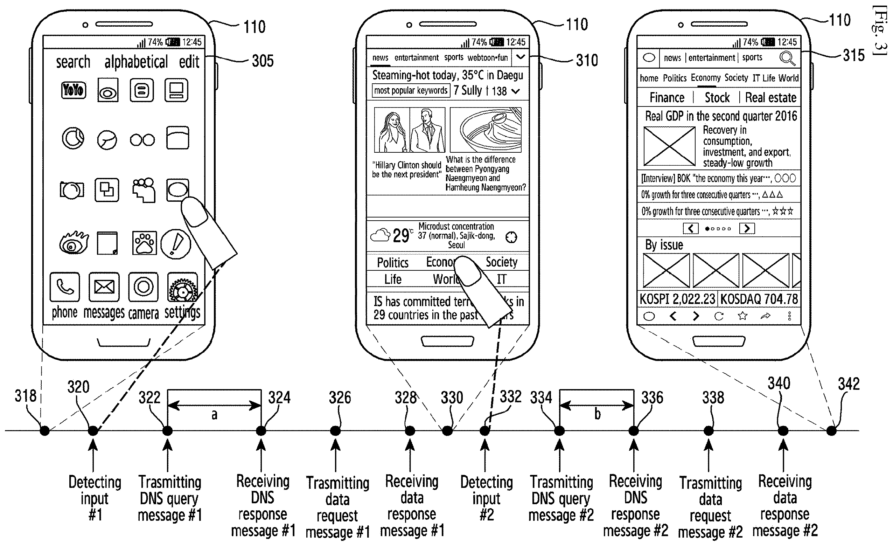

FIG. 3 illustrates an example of DNS signaling according to various exemplary embodiments of the present disclosure.

Referring to FIG. 3, the electronic device 110 may display a UI including a plurality of objects (for example, icons or the like), such as a UI 305, at time 318. Each of the plurality of objects may be used to run an application stored in the electronic device 110. Some of the plurality of objects may be interrelated with an application using Internet access. For example, the application utilizing Internet may be an application for access to a web page, an application for an Internet shopping service, an application related to a game, or the like.

At time 320, the electronic device 110 may detect a first input (input #1). For example, the first input may be an input with respect to an object related to an application for providing a portal service requiring Internet access. The electronic device 110 may identify a first domain name from the first input.

At time 322, the electronic device 110 may transmit a first DNS query message (DNS query message #1) including information on the identified first domain name to the DNS server 120 in order to properly run the application for providing the portal service. The DNS server 120 may transmit a first DNS response message (DNS response message #1) including information on an address corresponding to the identified first domain name to the electronic device 110 in response to the reception of the first DNS query message including the information on the identified first domain name from the electronic device 110.

At time 324, the electronic device 110 may receive the first DNS response message including the information on the address corresponding to the identified first domain name from the DNS server 120.

A time interval between the time 320 and the time 324 may be a.

At time 326, the electronic device 110 may transmit a first data request message (data request message #1) to the server (for example, the content server 130 or the like) indicated by the received address. The electronic device 110 may transmit the first data request message to the server in order to properly run the application for providing the portal service. The server may transmit a first data response message (data response message #1) to the electronic device 110 in order to properly run the application for providing the portal service, in response to the reception of the first data request message from the electronic device 110.

At time 328, the electronic device 110 may receive the first data response message from the server. The first data response message may include information for properly running the application for providing the portal service. Further, the first data response message may include information requested from the electronic device 110 to the server using the first data request message.

At time 330, the electronic device 110 may display a UI pertaining to the application for providing the portal service, such as a UI 310, based on the received first data response message.

At time 332, the electronic device 110 may detect a second input (input #2). For example, the second input may be an input with respect to an object included in the displayed UI 310. The second input may be an input requiring access to a server having a different address. Further, the second input may be an input highly likely to occur after the first input. For example, the second input may be an input related to a function generally run by the user on the application run through the first input. The electronic device 110 may identify a second domain name from the second input.

At time 334, the electronic device 110 may transmit a second DNS query message (DNS query message #2), including information on the identified second domain name, to the DNS server 120 in order to activate the function related to the second input. The DNS server 120 may transmit a second DNS response message (DNS response message #2), including information on an address corresponding to the identified second domain name, to the electronic device 110 in response to the reception of the second DNS query message including the information on the identified second domain name from the electronic device 110.

At time 336, the electronic device 110 may receive the second DNS response message including the information on the address corresponding to the identified second domain name from the DNS server 120.

A time interval between the time 334 and the time 336 may be b.

At time 338, the electronic device 110 may transmit a second data request message (data request message #2) to a server (for example, the content server 130 or the like) indicated by the received address. The electronic device 110 may transmit the second data request message to the server in order to perform the function related to the second input. The server may transmit a second data response message (data response message #2) to the electronic device 110 so that the electronic device 110 properly performs the function related to the second input, in response to the reception of the second data request message from the electronic device 110.

At time 340, the electronic device 110 may receive the second data response message from the server. The second data response message may include information for properly activating the function related to the second input. Further, the second data response message may include information requested from the electronic device 110 to the server using the second data request message.

At time 342, the electronic device 110 may display a UI related to the second input, such as a UI 315, based on the received second data response message.

As described above, the user of the electronic device 110 may access the Internet using a domain name, which has higher accessibility than an address set with a combination of numbers. However, Internet access using a domain name additionally utilizes DNS signaling between the electronic device 110 and the DNS server 120. DNS signaling is used whenever access to a new entity occurs, which may cause a delay. In FIG. 3, Internet access by the electronic device 110 may be delayed by a+b in a time period between the time 318 and the time 342.

Therefore, the present disclosure provides an electronic device and an operating method thereof that perform, in parallel, not only a DNS query about a content server to which access is currently being attempted, but also a DNS query expected to occur after the DNS query to thereby reduce a delay caused by DNS signaling.

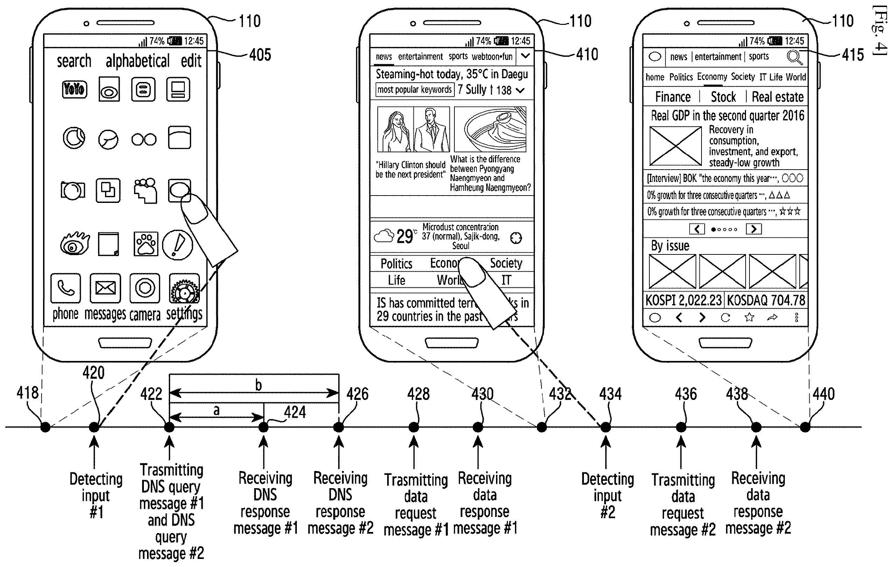

FIG. 4 illustrates an example of parallel DNS signaling according to various exemplary embodiments of the present disclosure.

Referring to FIG. 4, an electronic device 110 may display a UI including a plurality of objects, such as a UI 405, at time 418.

At time 420, the electronic device 110 may detect a first input (input #1). For example, the first input may be an input made with respect to an object related to an application for providing a portal service requiring Internet access. The electronic device 110 may analyze the first input, thereby identifying a first domain name from the first input.

At time 422, the electronic device 110 may transmit not only a first DNS query message (DNS query message #1) including information on the identified first domain name but also a second DNS query message (DNS query message #2) including information on a second domain name to the DNS server 120 in order to reduce a delay caused by DNS signaling. The second domain name may be a domain name associated with the first domain name.

For example, suppose that the user of the electronic device 110 has a high probability of accessing a server indicated by the second domain name within a designated interval after accessing a server indicated by the first domain name. In this case, the electronic device 110 may predict, by learning an Internet access pattern of the user of the electronic device 110, that the user of the electronic device 110 accesses the server indicated by the first domain name and then accesses the server indicated by the second domain name. Therefore, the electronic device 110 may transmit, to the DNS server 120, not only the first DNS query message including the information on the first domain name that the user of the electronic device 110 currently accesses but also the second DNS query message including the information on the second domain name associated with the first domain name.

FIG. 4 illustrates an example in which the first DNS query message and the second DNS query message are simultaneously transmitted. In some exemplary embodiments, however, the first DNS query message and the second DNS query message may be transmitted at a certain time interval without regard as to the order thereof. Also, in some other exemplary embodiments, the electronic device 110 may transmit a single DNS query message including the information on the first domain name and the information on the second domain name associated with the first domain name to the DNS server 120.

The DNS server 120 may receive the first DNS query message from the electronic device 110 and may receive the second DNS query message from the electronic device 110. To notify the electronic device 110 of an address corresponding to the first domain name, the DNS server 120 may transmit a first DNS response message (DNS response message #1), including information on the address corresponding to the first domain name, to the electronic device 110. Further, to notify the electronic device 110 of an address corresponding to the second domain name, the DNS server 120 may transmit a second DNS response message (DNS response message #2), including information on the address corresponding to the second domain name, to the electronic device 110.

At time 424, the electronic device 110 may receive the first DNS response message including the information on the address corresponding to the first domain name from the DNS server 120.

At time 426, the electronic device 110 may receive the second DNS response message including the information on the address corresponding to the second domain name from the DNS server 120. The electronic device 110 may store the information on the address corresponding to the second domain name included in the received second DNS response message. In some exemplary embodiments, when the received second DNS response message further includes an available period (for example, TTL or the like) of the address corresponding to the second domain name, the information on the address corresponding to the second domain name may be stored in the electronic device 110 during the available period.

A time of "a," corresponding to a time interval between the time 422 and the time 424, may be consumed for signaling for a query and a response associated with the first domain name, and a time of "b," corresponding to a time interval between the time 422 and the time 426, may be consumed for signaling for a query and a response associated with the second domain name.

FIG. 4 illustrates a case where the time interval b is longer than the time interval a, which is merely an example for description. The time interval b may be equal to the time interval a, or may be shorter than the time interval a.

Processes of transmitting the first DNS query message, transmitting the second DNS query message, receiving the first DNS response message, and receiving the second DNS response message may collectively be referred to as parallel DNS signaling.

At time 428, the electronic device 110 may transmit a first data request message (data request message #1) to a server indicated by the first DNS response message. The server indicated by the first DNS response message may transmit a first data response message (data response message #1) to the electronic device 110 in response to the reception of the first data request message from the electronic device 110. The first data response message may include information requested by the electronic device 110.

FIG. 4 illustrates the case where the time 428 follows the time 426, which is merely an example for description. The time 428 may be coincident with or may precede the time 426. That is, the electronic device 110 may transmit the first data request message to the server indicated by the first DNS response message, regardless of whether the second DNS response message is received.

At time 430, the electronic device 110 may receive the first data response message from the server indicated by the first DNS response message.

At time 432, the electronic device 110 may display a UI, such as a UI 410, based on the received first data response message.

At time 434, the electronic device 110 may detect a second input (input #2). The second input may be an input for the electronic device 110 to access the server indicated by the second domain name.

In some exemplary embodiments, the second input may be an input predicted to be detected within a designated interval after the electronic device 110 detects the first input. The designated interval may be a period determined by the electronic device 110. As described above, the electronic device 110 may predict that the second input is detected after the first input is detected, by learning that the user of the electronic device 110 has a high probability of accessing the server indicated by the second domain name after accessing the server indicated by the first domain name. The electronic device 110 may use the designated interval in order to check whether the second input actually occurs (or is detected) after the first input is detected. For example, when the electronic device 110 learns that the user of the electronic device 110 accesses the server indicated by the first domain name and then accesses the server indicated by the second domain name after k seconds, the electronic device 110 may set the designated interval to k seconds. Depending on the embodiment, the electronic device 110 may set the designated interval to k+1 seconds to provide additional time for the second input.

At time 436, the electronic device 110 may transmit a second data request message (data request message #2) to the server indicated by the address corresponding to the second domain name, without DNS signaling. Since the electronic device 110 stores the address corresponding to the second domain name in advance based on the second DNS response message received at the time 426, the electronic device 110 may transmit the second data request message to the server indicated by the address corresponding to the second domain name, without DNS signaling. The server indicated by the address corresponding to the second domain name may transmit a second data response message to the electronic device 110 in response to the reception of the second data request message from the electronic device 110.

At time 438, the electronic device 110 may receive the second data response message from the server indicated by the address corresponding to the second domain name.

At time 440, the electronic device 110 may display a UI related to the second input, such as a UI 415, based on the received second data response message.

The electronic device 110 of FIG. 3 has a delay due to DNS signaling, which is a time interval of a+b, to perform the procedure shown in FIG. 3, while the electronic device 110 of FIG. 4 has a delay due to DNS signaling, which is a time interval of |a - b|, to perform the same procedure as that in FIG. 3 (that is, the procedure shown in FIG. 4). That is, the electronic device 110 shown in FIG. 4, which performs parallel DNS signaling, may access the Internet with a shorter delay than the electronic device 110 shown in FIG. 3, which performs general DNS signaling. FIG. 4 illustrates the case where there is one domain name associated with the first domain name. However, when there is a plurality of domain names associated with the first domain name, the delay reduction effect may be further enhanced.

That is, an electronic device and an operating method thereof according to various exemplary embodiments of the present disclosure may reduce a delay due to DNS signaling through parallel DNS signaling, thereby allowing a user to quickly access the Internet. In addition, an electronic device and an operating method thereof according to various exemplary embodiments of the present disclosure may reduce a delay caused by DNS signaling through parallel DNS signaling, thereby allowing a user to quickly run an application.

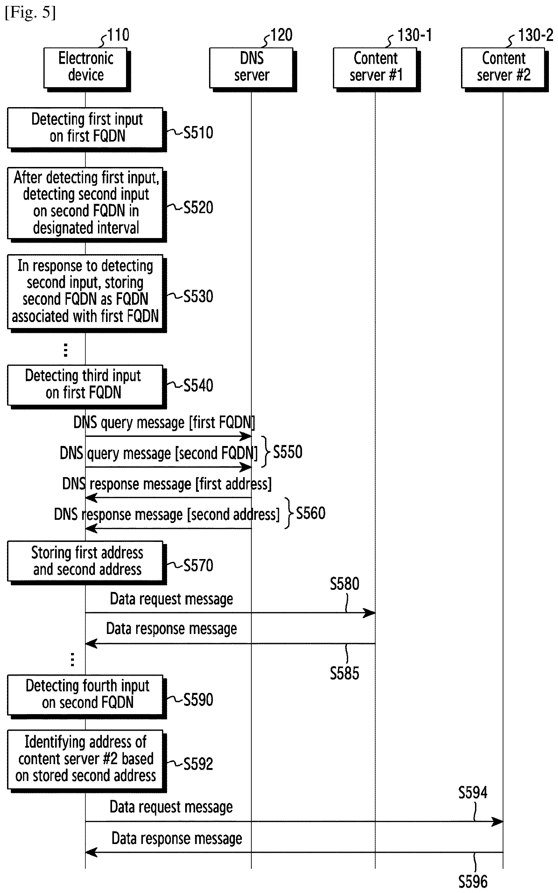

FIG. 5 illustrates an example of signal flow between an electronic device performing parallel DNS signaling, a DNS server, and a content server according to various exemplary embodiments of the present disclosure.

Referring to FIG. 5, the electronic device 110 may detect a first input with respect to a first domain name in operation S510. For example, the electronic device 110 may identify the first domain name from a URL directly input into a web page, a URL included as an attribute of an object (for example, a link or the like) displayed on a web page, or a URL included as an attribute of an object for running an application requiring Internet access.

In operation S520, the electronic device 110 may detect an input with respect to a second domain name within a designated interval after detecting the first input.

Operation S510 and operation S520 may be repeatedly performed. For example, when the user of the electronic device 110 habitually generates the first input and then generates a second input within the designated interval, operation S510 and operation S520 may be repeatedly performed. Further, the electronic device 110 may learn that the second input is predicted to be detected within the designated interval after the first input is detected, through the repetition of operation S510 and operation S520.

When the electronic device 110 learns that the second input is detected within the designated interval after the first input is detected, the electronic device 110 may store the second domain name as a domain name associated with the first domain name in the electronic device 110, in response to the detection of the second input, in operation S530. Operation S530 may be an operation to perform a DNS query about the second domain name in parallel when the first input is subsequently detected and thus a DNS query about the first domain name is performed.

In operation S540, the electronic device 110 may detect a third input with respect to the first domain name.

In operation S550, the electronic device 110 may transmit a DNS query message including information on the first domain name to the DNS server 120 in order to obtain an address of a server indicated by the first domain name. For example, the address may be an IP address. Further, the electronic device 110 may predict that input with respect to the second domain name may be detected after the input with respect to the first domain name, and thus may transmit a DNS query message including information on the second domain name to the DNS server 120. The DNS server 120 may receive the DNS query message including the information on the first domain name and the DNS query message including the information on the second domain name from the electronic device 110.

In operation S560, the DNS server 120 may transmit a DNS response message including information on a first address corresponding to the first domain name and a DNS response message including information on a second address corresponding to the second domain name to the electronic device 110. The DNS response message including the information on the first address may be a message for reporting an address of a server that the electronic device 110 intends to access through the third input. The DNS response message including the information on the second address may be a message for storing in advance the information on the second address corresponding to the second domain name in the electronic device 110 in order to prepare for the access of the electronic device 110 to the server indicated by the second domain name. The operation of storing the address in advance may also be referred to as pre-caching, pre-fetching, or pre-resolving depending on the embodiment.

In some exemplary embodiments, the DNS response message including the information on the first address may further include information on an available period (for example, TTL or the like) of the first address, and the DNS response message including the information on the second address may further include information on an available period of the second address.

In operation S570, the electronic device 110 may store the information on the first address and the information on the second address in the electronic device 110 (for example, a storage unit in the electronic device 110). In some exemplary embodiments, when the DNS response message including the information on the first address further includes the information on the available period (for example, TTL or the like) of the first address and the DNS response message including the information on the second address further includes the information on the available period of the second address, the information on the first address may be stored in a first electronic device 110 during the available period of the first address and the information on the second address may be stored in a second electronic device 110 during the available period of the second address.

In operation S580, the electronic device 110 may transmit a data request message to a first content server 130-1 to perform an operation with respect to the third input. The first content server 130-1 may be a server performing a function the same as or similar to that of the content server 130 shown in FIG. 1 and/or FIG. 2. The first content server 130-1 may be a server providing the electronic device 110 with a function or a service corresponding to the third input. The first content server 130-1 may receive the data request message from the electronic device 110.

In operation S585, the first content server 130-1 may transmit a data response message, generated based on the data request message, to the electronic device 110. The electronic device 110 may receive the data response message from the first content server 130-1.

In operation S590, the electronic device 110 may detect a fourth input with respect to the second domain name. The fourth input may be an input detected within the designated interval after the third input is detected. The fourth input may be an input associated with the third input. The fourth input may be an input predicted to be detected by the electronic device 110 within the designated interval after the third input is detected.

In operation S592, the electronic device 110 may identify an address of a second content server 130-2 based on the stored second address. The second content server 130-2 may be a server performing a function the same as or similar to that of the content server 130 shown in FIG. 1 and/or FIG. 2. The second content server 130-2 may be a server providing the electronic device 110 with a function or a service corresponding to the fourth input. The electronic device 110 may store information on the address of the second content server 130-2 in advance through operation S570. The electronic device 110 may identify the address of the second content server 130-2, without a DNS query operation, based on the stored information on the address of the second content server 130-2.

In operation S594, the electronic device 110 may transmit a data request message to the second content server 130-2 based on the identified address of the second content server 130-2. The electronic device 110 may transmit the data request message to the second content server 130-2 in order to be provided with the function or service corresponding to the fourth input from the second content server 130-2. The second content server 130-2 may receive the data request message from the electronic device 110.

In operation S596, the second content server 130-2 may transmit a data response message to the electronic device 110. The second content server 130-2 may transmit the data response message to the electronic device 110 in response to the data request message in order to provide the electronic device 110 with the function or service corresponding to the fourth input. The electronic device 110 may receive the data response message from the second content server 130-2.

As described above, the electronic device 110 according to various exemplary embodiments of the present disclosure may prevent a decrease in Internet access speed due to DNS signaling through a learning operation, such as operation S510 and operation S520, a pre-caching operation, such as operation S530, and a parallel DNS signaling operation, such as operation S550 and operation S560.

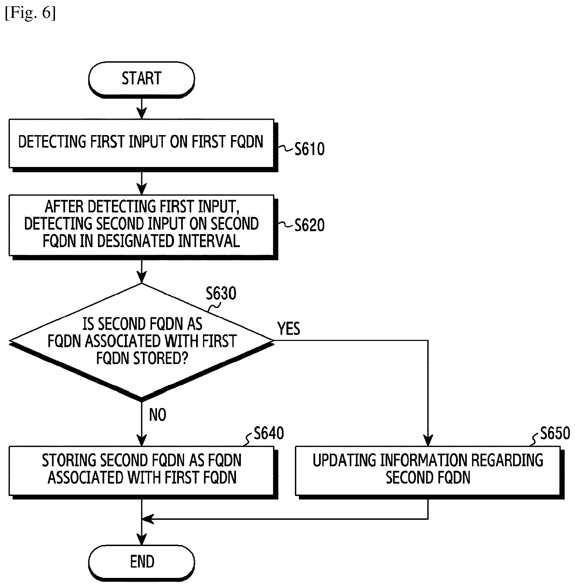

FIG. 6 illustrates an example of operation flow of an electronic device that controls information on a domain name for parallel DNS signaling according to various exemplary embodiments of the present disclosure.

Referring to FIG. 6, the electronic device 110 may detect a first input with respect to a first domain name in operation S610.

In operation S620, the electronic device 110 may detect a second input with respect to a second domain name within a designated interval after detecting the first input. When the second input is detected within the designated interval following the first input, the electronic device 110 may perform an operation for determining the second input as an input that occurs following the first input.

In operation S630, the electronic device 110 may determine whether the second domain name is stored as a domain name associated with the first domain name in order to determine whether the second input is an input that occurs after the first input. When no second domain name is stored as a domain name associated with the first input, the electronic device 110 may perform operation S640. However, when the second domain name is stored as a domain name associated with the first input, the electronic device 110 may perform operation S650.

In operation S640, the electronic device 110 may store the second domain name as a domain name associated with the first domain name. The electronic device 110 may store the second domain name as a domain name associated with the first domain name in order to determine whether the second input is an input that occurs after the first input. In some exemplary embodiments, the electronic device 110 may store the second domain name as a domain name associated with the first domain name in order to monitor whether the second input is an input that occurs after the first input.

In operation S650, the electronic device 110 may update information on the second domain name. The electronic device 110 may update the information on the second domain name stored as the domain name associated with the first domain name in order to predict an input that occurs after the first input. For example, suppose that the second domain name and a third domain name are stored in the electronic device 110 as a domain name associated with the first domain name. When the frequency at which the second input is detected after the first input is detected is greater than the frequency at which a third input with respect to the third domain name is detected after the first input is detected, the electronic device 110 may update the information on the second domain name so that the second domain name is set to have a higher priority than the third domain name. For example, the electronic device 110 may control information on the second domain name and the third domain name using the following matrix, shown in Equation 1.

[Equation 1]

$$G = \begin{bmatrix} p_{11} & p_{12} & \cdots & p_{1n} \\ p_{21} & p_{22} & \cdots & p_{2n} \\ \vdots & \vdots & \ddots & \vdots \\ p_{n1} & p_{n2} & \cdots & p_{nn} \end{bmatrix}$$

Here, $P_{ij}$ denotes the probability that input j is detected within a designated interval after input i is detected.

For example, $P_{12}$ denotes the probability that the second input is detected within the designated interval after the first input is detected, and $P_{13}$ denotes the probability that the third input is detected within the designated interval after the first input is detected.

The electronic device 110 may determine priorities of the second input and the third input associated with the first input corresponding to probability values represented by elements in the matrix in Equation 1.

When the second domain name is stored as the domain name associated with the first domain name, as in operation S650, the electronic device 110 may adjust $P_{12}$ upwards in the matrix in Equation 1.

However, when the second domain name is not stored as a domain name associated with the first domain name, as in operation S640, the electronic device 110 may insert $P_{12}$ into the matrix in Equation 1 in order to monitor whether the second input is subsequently detected within the designated interval after the first input is detected. In this case, $P_{12}$ may be set to 1/(number of times the first input is detected).

The electronic device 110 according to various exemplary embodiments of the present disclosure may predict an input that occurs after an input detected by the electronic device 110 through operations S610 through S650. That is, the electronic device 110 may control information on a relationship between a domain name and another domain name for parallel DNS signaling through operations S610 to S650.

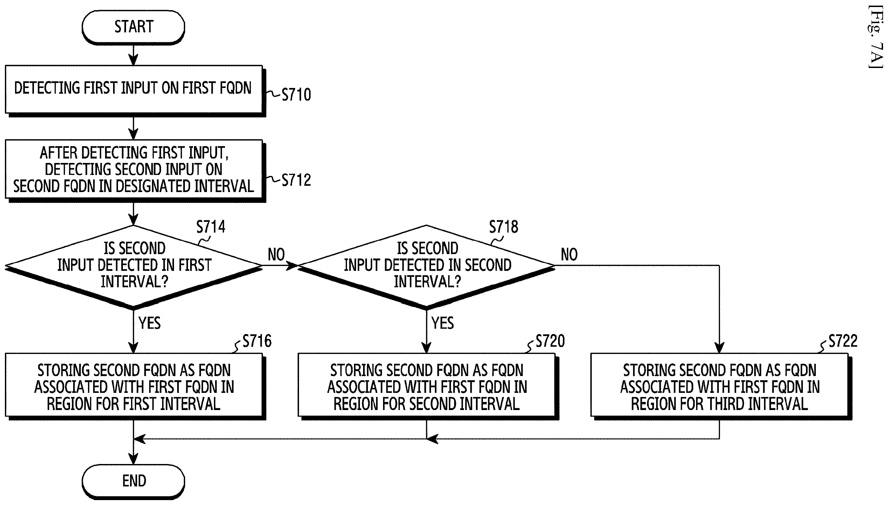

FIG. 7A illustrates an example of operation flow of an electronic device that stores information on a domain name by time interval for parallel DNS signaling according to various exemplary embodiments of the present disclosure.

Referring to FIG. 7A, the electronic device 110 may detect a first input with respect to a first domain name in operation S710.

In operation S712, the electronic device 110 may detect a second input with respect to a second domain name within a designated interval after detecting the first input. In general, users may use an electronic device for different purposes in different time intervals. That is, users may activate a different function of the electronic device in different time intervals. For example, the user of the electronic device 110 may access a portal site through the first input and may access a weather site connected to the portal site through the second input in the morning, while the user may access a portal site through the first input and may access a news site connected to the portal site through the second input in the evening. In another example, the user of the electronic device 110 may access a portal site through the first input and may access a shopping site through the second input on weekdays (from Monday to Friday), while the user may access a portal site through the first input and may access a travel site through the second input at weekends. Accordingly, the electronic device 110 may perform an operation for distinguishing the usage patterns of the user of the electronic device 110 in different time intervals.

In operation S714, the electronic device 110 may determine whether the second input is detected in a first time interval in order to learn the usage pattern of the user of the electronic device 110 by time interval. When the second input is detected in the first time interval, the electronic device 110 may perform operation S716. However, when the second input is not detected in the first time interval, the electronic device 110 may perform operation S718.

In operation S716, the electronic device 110 may store the second domain name as a domain name associated with the first domain name in a region for the first time interval. Operation S716 of FIG. 7A illustrates a process of storing the second domain name as the domain name associated with the first domain name. However, when the second domain name is already stored as a domain name associated with the first domain name in the region for the first time interval, the electronic device 110 may update information on the second domain name stored in the region for the first time interval, as in operation S650 of FIG. 6.

In operation S718, the electronic device 110 may determine whether the second input is detected in a second time interval. When the second input is detected in the second time interval, the electronic device 110 may perform operation S720. However, when the second input is not detected in the second time interval, the electronic device 110 may perform operation S722.

In operation S720, the electronic device 110 may store the second domain name as a domain name associated with the first domain name in a region for the second time interval. Operation S720 of FIG. 7A illustrates a process of storing the second domain name as the domain name associated with the first domain name. However, when the second domain name is already stored as a domain name associated with the first domain name in the region for the second time interval, the electronic device 110 may update the information on the second domain name stored in the region for the second time interval, as in operation S650 of FIG. 6.

In operation S722, the electronic device 110 may store the second domain name as a domain name associated with the first domain name in a region for a third time interval.

FIG. 7A illustrates three divided time intervals, which is merely for description. In alternative embodiments, there may be n divided time intervals depending on the configuration set by the user of the electronic device 110 or a result of learning by the electronic device 110.

The electronic device 110 according to various exemplary embodiments of the present disclosure may predict an input that occurs after a detected input, categorized according to time, through operations S710 to S722. That is, the electronic device 110 may adaptively perform parallel DNS signaling according to the usage pattern of the electronic device 110 through operations S710 to S722, thereby improving the Internet access speed of the electronic device 110.

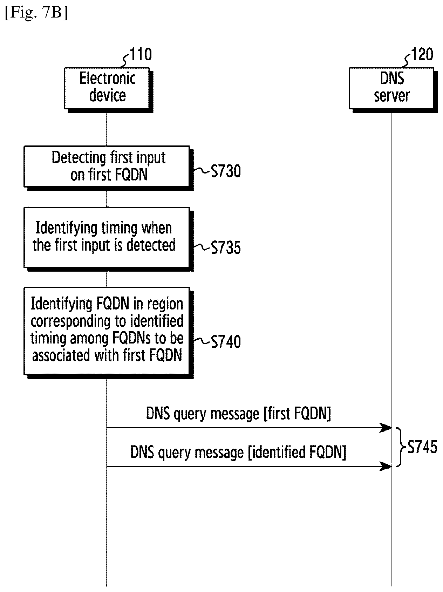

FIG. 7B illustrates an example of signal flow between an electronic device adaptively performing parallel DNS signaling and a DNS server according to various exemplary embodiments of the present disclosure.

Referring to FIG. 7B, the electronic device 110 may detect a first input with respect to a first domain name in operation S730. The electronic device 110 may predict an input that occurs after the first input according to time. That is, the electronic device 110 may predict an input that occurs after the first input according to time through the operations illustrated in FIG. 7A.

In operation S735, the electronic device 110 may identify the time at which the first input is detected in order to predict an input that occurs after the first input according to time. For example, when the first input is detected at 9 a.m., the electronic device 110 may identify that the first input is detected at 9 a.m. In another example, when the first input is detected at 4 p.m., the electronic device 110 may identify that the first input is detected at 4 p.m.

In operation S740, the electronic device 110 may identify a domain name in a region corresponding to the identified time among domain names associated with the first domain name. For example, when the identified time is 9 a.m., the electronic device 110 may identify, as a domain name associated with the first domain name, a domain name in a storage region for morning time among the domain names associated with the first domain name. In another example, when the identified time is 4 p.m., the electronic device 110 may identify, as a domain name associated with the first domain name, a domain name in a storage region for an evening time among the domain names associated with the first domain name.

In operation S745, the electronic device 110 may transmit a DNS query message including information on the first domain name and may transmit a DNS query message including information on the identified domain name in order to initialize parallel DNS signaling. In some exemplary embodiments, the DNS query message including the information on the first domain name and the DNS query message including the information on the identified domain name may be transmitted at the same time or at a certain interval regardless of order. In some other exemplary embodiments, unlike in FIG. 7B, the information on the first domain name and the information on the identified domain name may be transmitted via a single DNS query message.

The electronic device 110 according to various exemplary embodiments of the present disclosure may determine (or identify) a domain name associated with a domain name with respect to an input adaptively detected by time interval to perform a DNS query through operations S730 to S745. That is, the electronic device 110 may perform parallel DNS signaling by reflecting the usage pattern of the electronic device 110 of the user, which changes by time interval, through the operation in operations S730 to S745.

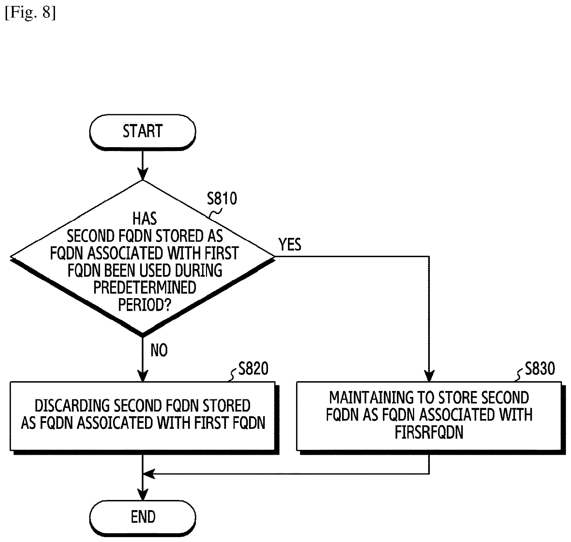

FIG. 8 illustrates another example of operation flow of an electronic device that controls information on a domain name stored for parallel DNS signaling according to various exemplary embodiments of the present disclosure.

Referring to FIG. 8, in operation S810, the electronic device 110 may identify (or determine) whether a second domain name, stored as a domain name associated with a first domain name, has been used during a predetermined period. For example, when a pattern, in which a second input with respect to the second domain name is detected within a designated interval after a first input with respect to the first domain name is detected, is changed to a pattern, in which the second input is not detected after the first input is detected, due to a user's pattern change, the electronic device 110 may need to discard or delete the second domain name stored as the domain name associated with the first domain name. The electronic device 110 may set the predetermined period to perform this discarding or deleting operation. The predetermined period may be a parameter for identifying the availability of the second domain name stored as the domain name associated with the first domain name. The predetermined period may be a parameter for discarding a relationship between the second domain name and the first domain name when the second domain name is not associated with the first domain name due to the user's pattern change.

The electronic device 110 may identify whether the second domain name stored as the domain name associated with the first domain name has been used during the predetermined period in order to identify the availability of the second domain name stored as the domain name associated with the first domain name. When the second domain name has been used during the predetermined period, the electronic device 110 may perform operation S830. However, when the second domain name has not been used during the predetermined period, the electronic device 110 may perform operation S820.

In operation S820, the electronic device 110 may discard or delete the second domain name stored as the domain name associated with the first domain name. The electronic device 110 may discard the second domain name stored as the domain name associated with the first domain name by recognizing a change of the usage pattern of the user of the electronic device 110.

In operation S830, the electronic device 110 may continue to store the second domain name as the domain name associated with the first domain name.

The electronic device 110 according to various exemplary embodiments of the present disclosure may accurately determine a domain name associated with a domain name detected by an input through operations S810 through S830. Further, through the operation in operations S810 to S830, the electronic device 110 may filter a domain name not associated with the detected domain name, thereby efficiently controlling a storage unit in the electronic device 110.

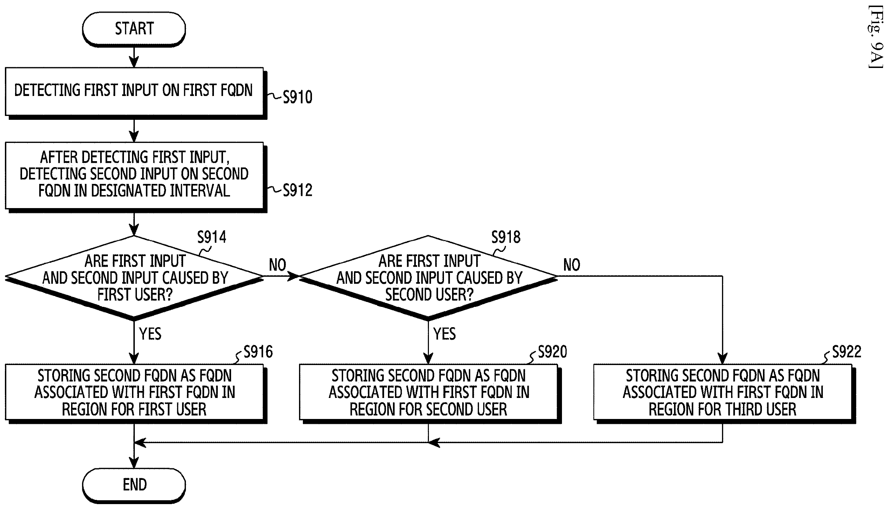

FIG. 9A illustrates an example of operation flow of an electronic device that stores information on a domain name by user for parallel DNS signaling according to various exemplary embodiments of the present disclosure.

Referring to FIG. 9A, the electronic device 110 may detect a first input with respect to a first domain name in operation S910.

In operation S912, the electronic device 110 may detect a second input with respect to a second domain name within a designated interval after the first input is detected. The electronic device 110 may be used by a single user or by a plurality of users. The plurality of users may use the electronic device 110 for different purposes. For example, if a user of the electronic device 110 is an adult, the user may use the electronic device 110 in a pattern of making a first input for accessing a portal site and then making a second input for accessing a news site. Alternatively, when another user of the electronic device 110 is a child, the user may use the electronic device 110 in a pattern of making a first input for accessing a portal site and then making a second input for accessing a game site. Accordingly, the electronic device 110 may perform an operation for distinguishing a domain name associated with an inputted domain name for each user.

In operation S914, the electronic device 110 may identify whether the first input and the second input are made by a first user in order to learn the usage pattern of each user of the electronic device 110. For example, the electronic device 110 may identify whether the first input and the second input are made by the first user through a user's ID, a user's fingerprint, or a user's password received by the electronic device 110. When the first input and the second input are made by the first user, the electronic device 110 may perform operation S916. When the first input and the second input are not made by the first user, the electronic device 110 may perform operation S918.

In operation S916, the electronic device 110 may store the second domain name as a domain name associated with the first domain name in a region for the first user. Operation S916 of FIG. 9A illustrates a process of storing the second domain name as a domain name associated with the first domain name. However, when the second domain name is already stored as a domain name associated with the first domain name in the region for the first user, the electronic device 110 may update information on the second domain name stored in the region for the first user, as in operation S650 of FIG. 6.

In operation S918, the electronic device 110 may identify whether the first input and the second input are made by a second user. When the first input and the second input are made by the second user, the electronic device 110 may perform operation S920. When the first input and the second input are not made by the second user, the electronic device 110 may perform operation S922.

In operation S920, the electronic device 110 may store the second domain name as a domain name associated with the first domain name in a region for the second user. Operation S920 of FIG. 9A illustrates a process of storing the second domain name as a domain name associated with the first domain name. However, when the second domain name is already stored as a domain name associated with the first domain name in the region for the second user, the electronic device 110 may update information on the second domain name stored in the region for the second user, as in operation S650 of FIG. 6.

In operation S922, the electronic device 110 may store the second domain name as a domain name associated with the first domain name in a region for a third user.

FIG. 9A illustrates a case where there are three users of the electronic device, which is merely for description. The number of users of the electronic device 110 may be two or more than three.

The electronic device 110 according to various exemplary embodiments of the present disclosure may store an input that occurs after a detected input separately for each user through operations S910 to S922. That is, through operations S910 to S922, the electronic device 110 may perform parallel DNS signaling adaptively for each user of the electronic device 110, thereby improving the Internet access speed of the electronic device 110.

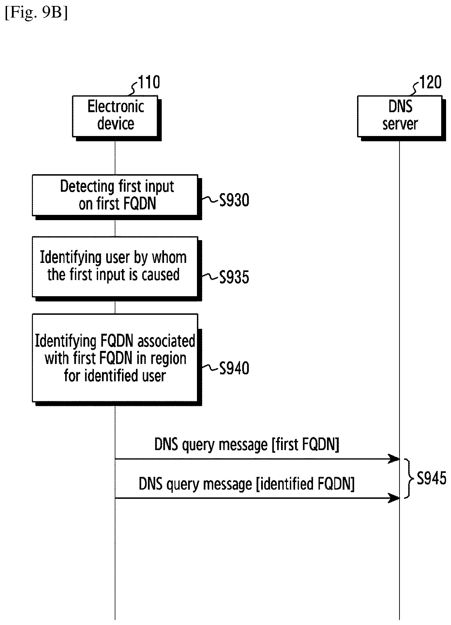

FIG. 9B illustrates another example of signal flow between an electronic device adaptively performing parallel DNS signaling and a DNS server according to various exemplary embodiments of the present disclosure.

Referring to FIG. 9B, the electronic device 110 may detect a first input made with respect to a first domain name in operation S930. The electronic device 110 may predict an input that occurs after the first input, which varies by user. That is, the electronic device 110 may predict an input that occurs after the first input, which varies by user, through the operations illustrated in FIG. 9A.

In operation 935, the electronic device 110 may identify which user made the first input. For example, the electronic device 110 may identify which user made the first input based on a user's ID, a user's fingerprint, a user's iris pattern, or a user's password.

In operation 940, the electronic device 110 may identify a domain name associated with the first domain name within a region for the identified user. For example, when the identified user is A, the electronic device 110 may identify the domain name associated with the first domain name in a storage region for user A in order to reflect the usage pattern of user A. In another example, when the identified user is B, the electronic device 110 may identify the domain name associated with the first domain name in a storage region for user B in order to reflect the usage pattern of user B.

In operation S945, the electronic device 110 may transmit a DNS query message including information on the first domain name and may transmit a DNS query message including information on the identified domain name in order to initiate parallel DNS signaling. In some exemplary embodiments, the DNS query message including the information on the first domain name and the DNS query message including the information on the identified domain name may be transmitted at the same time or at a certain interval regardless of order. In some other exemplary embodiments, unlike in FIG. 9B, the information on the first domain name and the information on the identified domain name may be transmitted via a single DNS query message.

Through operations S930 to S945, the electronic device 110 according to various exemplary embodiments of the present disclosure may identify a domain name associated with another domain name with respect to an input adaptively detected by user, thereby performing parallel DNS signaling. That is, through operations S930 to S945, the electronic device 110 may perform parallel DNS signaling considering a usage pattern, which may be different for respective users.

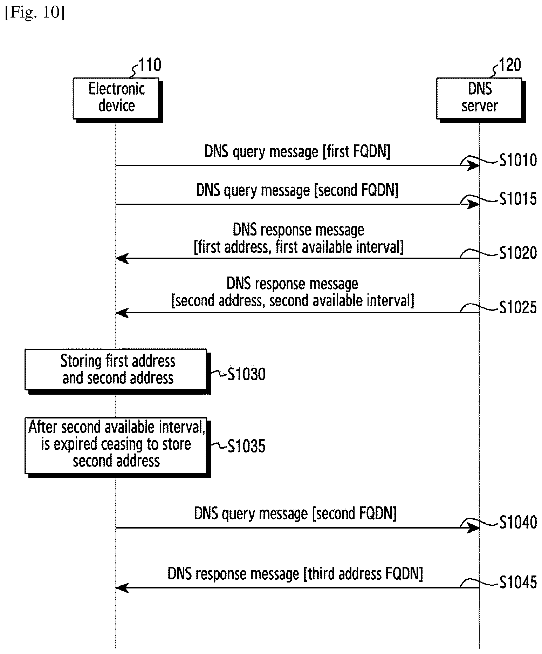

FIG. 10 illustrates another example of signal flow between an electronic device performing parallel DNS signaling and a DNS server according to various exemplary embodiments of the present disclosure.

Referring to FIG. 10, the electronic device 110 may transmit a DNS query message including information on a first domain name in operation S1010. The first domain name may be a domain name identified by an input made by a user. The DNS server 120 may receive the DNS query message including the information on the first domain name from the electronic device 110.

In operation S1015, the electronic device 110 may transmit a DNS query message including information on a second domain name. The second domain name may be a domain name associated with the first domain name. The DNS server 120 may receive the DNS query message including the information on the second domain name from the electronic device 110.

Operation S1010 and operation S1015 may be performed simultaneously or in reverse order depending on the embodiment.

In operation S1020, the DNS server 120 may transmit, to the electronic device 110, a DNS response message including information on a first address corresponding to the first domain name and information on a first available period (for example, TTL) of the first address. The electronic device 110 may receive the DNS response message from the DNS server 120.

In operation S1025, the DNS server 120 may transmit, to the electronic device 110, a DNS response message including information on a second address corresponding to the second domain name and information on a second available period of the second address. The electronic device 110 may receive the DNS response message from the DNS server 120

Operation S1020 and operation S1025 may be performed simultaneously or in reverse order depending on the embodiment. Operation S1015 and operation S1020 may be performed simultaneously or in reverse order depending on the embodiment.

In operation S1030, the electronic device 110 may store the first address and the second address based on the DNS response message including the information on the first address and the information on the first available period of the first address and the DNS response message including the information on the second address and the information on the second available period of the second address. That is, the first address may be stored in the electronic device 110 during the first available period, and the second address may be stored in the electronic device 110 during the second available period.

In operation S1035, the electronic device 110 may stop storing the second address when the second available period expires, because the second address may be an address that is not cached in the DNS server 120 when the second available period expires.

However, when storing the second address is stopped before the designated interval, the electronic device 110 may not be able to use the received second address for parallel DNS signaling. That is, because the second available period is not a parameter determined by the electronic device 110, the electronic device 110 may not obtain an effect of reducing a delay in parallel signaling due to a gap (difference) between the second available period and the designated interval. The electronic device 110 may perform complementary DNS signaling as follows in order to compensate for the difference between the second available period and the designated interval.

In operation S1040, the electronic device 110 may transmit a DNS query message including the information on the second domain name to the DNS server 120. The electronic device 110 may transmit the DNS query message including the information on the second domain name to the DNS server 120 in order to acquire the address corresponding to the second domain name again. The DNS server 120 may receive the DNS query message including the information on the second domain name from the electronic device 110.

In operation S1045, the DNS server 120 may transmit a DNS response message including information on a third address to the electronic device 110. The electronic device 110 may receive the DNS response message from the DNS server 120. The information on the third address may be information for supplementing the second address deleted from the electronic device 110. The information on the third address may be information used to access a server indicated by the second domain name using the third address without DNS signaling when the electronic device 110 detects an input with respect to the second domain name.

The electronic device 110 according to various exemplary embodiments of the present disclosure may compensate for a difference between an available period of an address and a designated interval through operation S1010 to operation S1045.

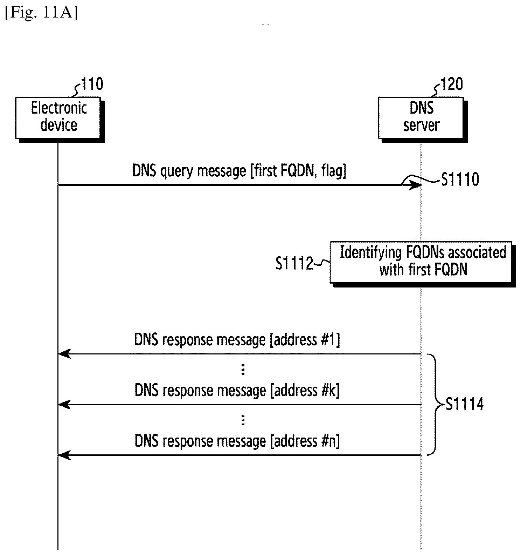

FIG. 11A illustrates another example of signal flow between an electronic device performing parallel DNS signaling and a DNS server according to various exemplary embodiments of the present disclosure.

Referring to FIG. 11A, the electronic device 110 may transmit a DNS query message including information on a first domain name and a flag to the DNS server 120 in operation S1110. The flag may include information to indicate that parallel DNS signaling is requested when parallel DNS signaling is available. The flag may be set in various formats. For example, when the flag includes one bit and is set to 1, the flag may indicate that parallel DNS signaling is requested. When the flag is set to 0, the flag may indicate that parallel DNS signaling is not requested. The DNS server 120 may receive the DNS query message from the electronic device 110.

In operation S1112, the DNS server 120 may identify domain names associated with the first domain name. The DNS server 120 may identify the domain names associated with the first domain name based on a previously obtained pattern of the electronic device 110. In some exemplary embodiments, the pattern of the electronic device 110 may be obtained by the DNS server 120 learning a usage pattern of the electronic device 110. In some other exemplary embodiments, the pattern of the electronic device 110 may be transmitted from the electronic device 110 via a separate message.

In operation S1114, the DNS server 120 may transmit, to the electronic device 110, a DNS response message including information on a first address corresponding to the first domain name and DNS response messages including information on addresses respectively corresponding to the domain names associated with the first domain name. The electronic device 110 may reduce DNS signaling caused by an input occurring after the first domain name by receiving the DNS response messages. That is, the electronic device 110 may improve the Internet access speed connection by receiving, in advance, an address for an Internet access input to occur subsequently.

The electronic device 110 according to various exemplary embodiments of the present disclosure may perform parallel DNS signaling with relatively low complexity through operations S1110 to S1114.

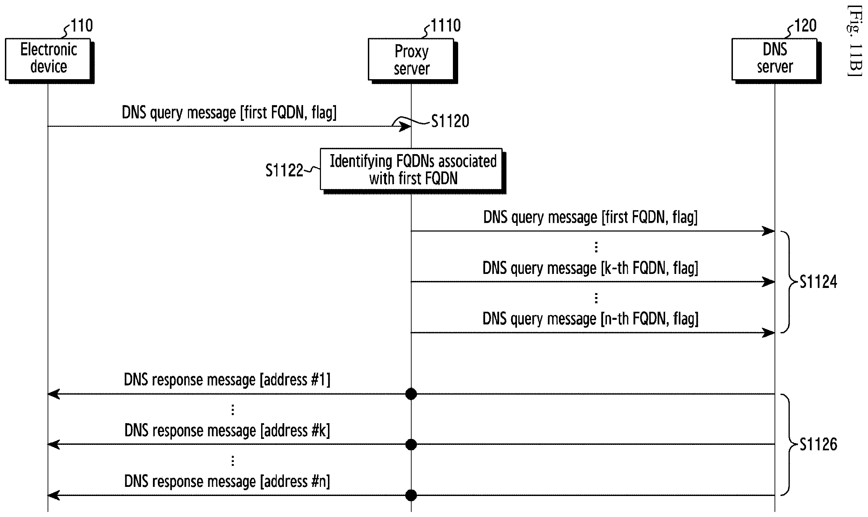

FIG. 11B illustrates an example of signal flow between an electronic device performing parallel DNS signaling, a proxy server, and a DNS server according to various exemplary embodiments of the present disclosure.

Referring to FIG. 11B, the electronic device 110 may transmit a DNS query message including information on a first domain name and a flag to the proxy server 1110 in operation S1120. The proxy server may be a server for relaying between the electronic device 110 and the DNS server 120. The proxy server 1110 may receive the DNS query message from the electronic device 110.

In operation S1 122, the proxy server 1110 may identify domain names associated with the first domain name. The proxy server 1110 may identify the domain names associated with the first domain name based on a previously obtained pattern of the electronic device 110. In some exemplary embodiments, the pattern of the electronic device 110 may be obtained by the proxy server 1110 learning a usage pattern of the electronic device 110. In some other exemplary embodiments, the pattern of the electronic device 110 may be transmitted from the electronic device 110 via a separate message.

In operation S1124, the proxy server 1110 may transmit, to the DNS server 120, a DNS query message for requesting an address corresponding to the first domain name and DNS query messages for requesting addresses respectively corresponding to the domain names associated with the first domain name. The DNS server 120 may receive the DNS query messages.

In operation S1126, the DNS server 120 may transmit a DNS response message including information on a first address corresponding to the first domain name and DNS response messages including information on addresses respectively corresponding to the domain names associated with the first domain name to the electronic device 110 through the proxy server 1110. The electronic device 110 may receive the DNS response messages from the DNS server 120 via the proxy server 1110.

The electronic device 110 according to various exemplary embodiments of the present disclosure may perform parallel DNS signaling via a proxy server through operations S1120 to S1126.

As described above, a method of an electronic device according to various exemplary embodiments of the present disclosure may include: detecting a first input with respect to a first domain name; detecting a second input with respect to a second domain name within a designated interval after the first input is detected; storing the second domain name as a domain name associated with the first domain name in a storage unit included in the electronic device, in response to detection of the second input; and transmitting a message for requesting information on an address corresponding to the first domain name and a message for requesting information on an address corresponding to the second domain name to a DNS server in response to detection of a third input with respect to the first domain name.

In some exemplary embodiments, the method of the electronic device may further include receiving, from the DNS server, a message including information on a first address corresponding to the first domain name and information on an available period of the first address and a message including information on a second address corresponding to the second domain name and information on an available period of the second address. Here, the information on the available period of the first address may include information on time-to-live (TTL) of the first address, and the information on the available period of the second address may include information on TTL of the second address. The information on the first address may be stored in the storage unit during the available period of the first address, and the information on the second address may be stored in the storage unit during the available period of the second address. The method of the electronic device may further include: detecting a fourth input with respect to the second domain name within the available period of the second address; and transmitting a message for requesting data to a server indicated by the second address stored in the storage unit in response to detection of the fourth input. The method of the electronic device may further include: detecting the fourth input after the available period of the second address; transmitting a message for requesting information on an address corresponding to the second domain name to the DNS server in response to detection of the fourth input; receiving a message including information on a third address corresponding to the second domain name and information on an available period of the third address from the DNS server; and transmitting a message for requesting data from a server indicated by the third address within the available period of the third address.

In some exemplary embodiments, the stored second domain name may be discarded from the storage unit when no input occurs with respect to the second domain name during a predetermined period.

In some exemplary embodiments, the first input may include an input for controlling a first application, and the second input may include an input for controlling a second application, which is different from the first application.

In some exemplary embodiments, the method of the electronic device may further include: transmitting a message for requesting information on an address corresponding to the second domain name to the DNS server in response to detection of the second input; receiving a message including the information on the address corresponding to the second domain name from the DNS server; and transmitting a message for requesting data to a server indicated by the address corresponding to the second domain name.

In some exemplary embodiments, the message for requesting the information on the address corresponding to the first domain name and the message for requesting the information on the address corresponding to the second domain name may be transmitted to the DNS server through a wireless path.

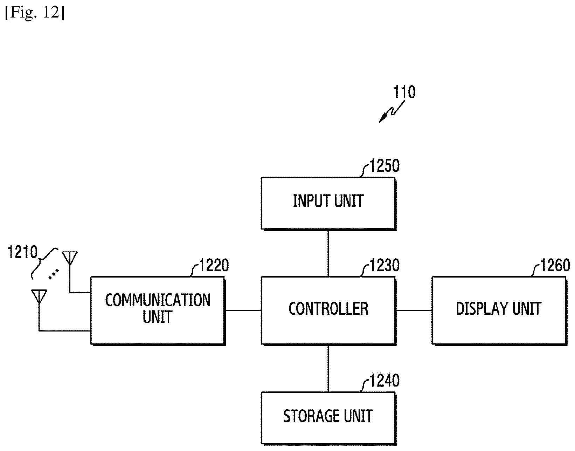

FIG. 12 illustrates an example of a functional configuration of an electronic device according to various exemplary embodiments of the present disclosure.

Referring to FIG. 12, a terminal 110 may include an antenna 1210, a communication unit 1220, a controller 1230, a storage unit 1240, an input unit 1250, and/or a display unit 1260.

The antenna 1210 may include one or more antennas. The antennas 1210 may be configured suitably for a multiple input multiple output (MIMO) method.

The communication unit 1220 may perform functions for transmitting or receiving a signal through a wired or wireless channel.

The communication unit 1220 may perform a function of converting between a baseband signal and a bit stream according to the physical layer specification of a system. For example, in data transmission, the communication unit 1220 may encode and modulate a transmitted bit stream to generate complex symbols. In another example, in data reception, the communication unit 1220 may demodulate and decode a baseband signal to reconstruct a received bit stream.

The communication unit 1220 may upconvert a baseband signal into a radio frequency (RF) band signal and may transmit the RF band signal through the antenna 1210. The communication unit 1220 may downconvert an RF band signal received through the antenna 1210 into a baseband signal. For example, the communication unit 1220 may include a transmission filter, a reception filter, an amplifier, a mixer, an oscillator, a digital-to-analog converter (DAC), an analog-to-digital converter (ADC), or the like.

The communication unit 1220 may be operatively coupled to the controller 1230.

The communication unit 1220 may include at least one transceiver.

The controller 1230 may control the overall operation of the terminal 110. For example, the controller 1230 may transmit or receive a signal through the communication unit 1220. The controller 1230 may record data in the storage unit 1240 and may read the data recorded in the storage unit 1240. To this end, the controller 1230 may include at least one processor. For example, the controller 1230 may include a communication processor (CP) to perform control for communication and an application processor (AP) to control a higher layer, such as an application program.

The controller 1230 may be configured to implement procedures and/or methods proposed in the present disclosure.

The storage unit 1240 may store a control command code, control data, or user data to control the terminal 110. For example, the storage unit 1240 may include an application, an operating system (OS), middleware, and a device driver.

The storage unit 1240 may include at least one of a volatile memory and a non-volatile memory. The volatile memory may include a dynamic random-access memory (DRAM), a static rAM (SRAM), a synchronous DRAM (SDRAM), a phase-change RAM (PRAM), a magnetic RAM (MRAM), a resistive RAM (RRAM), a ferroelectric RAM (FeRAM), and the like. The non-volatile memory may include a read-only memory (ROM), a programmable rOM (PROM), an electrically programmable ROM (EPROM), an electrically erasable ROM (EEPROM), a flash memory, and the like.

The storage unit 1240 may include a non-volatile medium, such as a hard disk drive (HDD), a solid state disk (SSD), an embedded multimedia card (eMMC), and a universal flash storage (UFS).

The storage unit 1240 may be operatively coupled to the controller 1230.

The input unit 1250 may detect an input made to the electronic device 110. The input unit 1250 may be a touch panel. For example, the input unit 1250 may detect a touch with a finger, a touch with a pen, and/or a hovering input. The input unit 1250 may be a keyboard, a microphone, or the like. The input unit 1250 may generate an input with respect to a domain name, an input for running an application, or the like according to various exemplary embodiments of the present disclosure.

The input unit 1250 may be operatively coupled to the controller 1230.

The display unit 1260 may display a result of processing in the electronic device 110. The display unit 1260 may be a liquid crystal display (LCD) or organic light emitting diodes (OLED).

The display unit 1260 may be operatively coupled to the controller 1230.

Depending on the embodiment, the input unit 1250 and the display unit 1260 may be designed as an integrated touch screen.

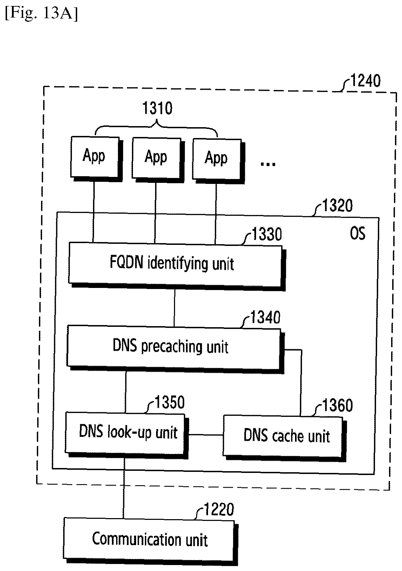

FIG. 13A illustrates an example of a functional configuration included in a storage unit in an electronic device according to various exemplary embodiments of the present disclosure.

Referring to FIG. 13A, the storage unit 1240 may include a plurality of applications 1310 and an OS 1320.

Each of the plurality of applications 1310 may be a program (or software) for providing a service to a user of the electronic device 110. That is, each of the plurality of applications 1310 may be a program set for the user of the electronic device 110 to perform a specific task. For example, each of the plurality of applications 1310 may be a word processor for the user to create a document of a user, a web browser for assisting a user in Internet access, and the like.

Some of the plurality of applications 1310 may be applications that may utilize Internet access. For example, some of the plurality of applications 1310 may include a web browser application, an application for Internet shopping, an application for online gaming, an application for SNS, and the like. Some of the plurality of applications 1310 may be interconnected with the OS 1320 so that the user may conveniently access the Internet. In some exemplary embodiments, some of the plurality of applications 1310 may be associated with a domain name identifying unit 1330 in the OS 1320 in order to provide high accessibility for the user.

The OS 1320 may perform a function of logically connecting and controlling hardware in the electronic device 110. The OS 1320 may perform a function of connecting each of the plurality of applications 1310 and the hardware in the electronic device 110.

The OS 1320 may include the domain name identifying unit 1330, a DNS precaching unit 1340, a DNS look-up unit 1350, and a DNS cache unit 1360.

The domain name identifying unit 1330 may identify a domain name from an input made through the electronic device 110. For example, when an input with respect to a link in a web page displayed on the display unit 1260 of the electronic device 110 is detected, the domain name identifying unit 1330 may identify a domain name from a URL indicated by the link. In another example, when an input with respect to a link in a web page displayed on the display unit 1260 of the electronic device 110 is detected, the domain name identifying unit 1330 may identify a domain name from a domain name (or host name) identified by some of the plurality of applications 1310 based on the link. In another example, when an input with respect to an object (for example, an icon or the like) for running an application requiring Internet access is detected, the domain name identifying unit 1330 may identify a domain name from a URL indicated by the object. In yet another example, when an input with respect to an object for running an application requiring Internet access is detected, the domain name identifying unit 1330 may identify a domain name from a domain name (or host name) identified by some of the plurality of applications 1310 based on a URL indicated by the object. In another example, when a URL connection is requested from an application stored in the electronic device 110, the domain name identifying unit 1330 may identify a domain name from a URL.

The domain name identifying unit 1330 may provide the DNS precaching unit 1340 with information on the identified domain name.

The DNS precaching unit 1340 may perform the functions illustrated in FIGS. 6, 7A, 8, and 9A so that the electronic device 110 may perform parallel DNS signaling.

For example, when a second input with respect to a second domain name is detected within a designated interval after a first input with respect to a first domain name is detected, the DNS precaching unit 1340 may store the second domain name as a domain name associated with the first domain name or may update information on the second domain name, which is already stored as a domain name associated with the first domain name.

In another example, the DNS precaching unit 1340 may manage the second domain name by time interval. For example, when the second input with respect to the second domain name is detected within the designated interval after the first input with respect to the first domain name is detected at a morning time, the DNS precaching unit 1340 may store the second domain name as a domain name associated with the first domain name in a region for the morning time.

In another example, the DNS precaching unit 1340 may manage the second domain name for respective users. For example, when the first input and the second input are caused by user A, the DNS precaching unit 1340 may store the second domain name as a domain name associated with the first domain name in a region for user A.

The DNS precaching unit 1340 may monitor the identified domain name so that the electronic device 110 may perform parallel DNS signaling. For example, when the first domain name is identified, the DNS precaching unit 1340 may detect that the first domain name is identified based on information on the identified first domain name provided by the domain name identifying unit 1330. Also, the DNS precaching unit 1340 may check whether there is a domain name associated with the identified first domain name. For example, when there is a domain name associated with the identified first domain name, the DNS precaching unit 1340 may provide the information on the identified first domain name and information on the domain name associated with the identified first domain name to the DNS look-up unit 1350.

The DNS look-up unit 1350 may perform a DNS query based on the information on the domain name provided from the DNS precaching unit 1340. The DNS look-up unit 1350 may check whether an address corresponding to the provided domain name is stored in the DNS cache unit. When the address corresponding to the provided domain name is stored in the DNS cache unit 1360, the DNS look-up unit 1350 may transmit a data request message to a server through the communication unit 1220 without a DNS signaling procedure. When the address corresponding to the provided domain name is not stored in the DNS cache unit 1360, the DNS look-up unit 1350 may transmit a DNS query message to the DNS server through the communication unit 1220 in order to obtain the address corresponding to the provided domain name.

The DNS cache unit 1360 may store addresses corresponding to domain names. The DNS cache unit 1360 may store the addresses during available periods of the respective addresses. The DNS cache unit 1360 may provide the DNS look-up unit 1350 with address information when the DNS look-up unit 1350 makes a request.

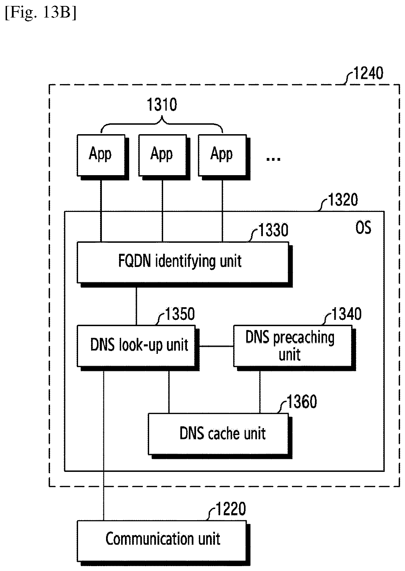

FIG. 13B illustrates another example of a functional configuration included in a storage unit in an electronic device according to various exemplary embodiments of the present disclosure.

FIG. 13B is an example of designing a functional configuration performing a function the same as or similar to that of FIG. 13A in a different connection method.

Referring to FIG. 13B, the storage unit 1240 may include a plurality of applications 1310 and an OS 1320 that are capable of performing functions the same as or similar to those of FIG. 13A.

Some of the plurality of applications 1310 may be applications that utilize Internet access. When an application that requires Internet access requests a connection to a URL, a domain name identifying unit 1330 may identify a domain name from the URL. The domain name identifying unit 1330 may provide a DNS look-up unit 1350 with information on the identified domain name.

The DNS look-up unit 1350 may inquire of a DNS precaching unit 1340 whether there is a domain name associated with the identified domain name based on the provided information on the domain name. When there is a domain name associated with the identified domain name, the DNS precaching unit 1340 may provide the DNS look-up unit 1350 with information on the domain name associated with the identified domain name. The DNS look-up unit 1350 may inquire whether a DNS cache unit 1360 stores the information on the identified domain name and the information on the domain name associated with the identified domain name. When the DNS cache unit 1360 stores the information on the identified domain name and the information on the domain name associated with the identified domain name, the DNS cache unit 1360 may provide the DNS look-up unit 1350 with an address corresponding to the identified domain name and an address corresponding to the domain name associated with the identified domain name. The DNS look-up unit 1350 may transmit a data request message based on the provided addresses to a server through the communication unit 1220 without performing DNS signaling. When the information on the identified domain name and the information on the domain name associated with the identified domain name are not stored, the DNS cache unit 1360 may provide, to the DNS look-up unit 1350, information indicating that no information on a queried address is stored. In this case, the DNS look-up unit 1350 may transmit a DNS query message to the DNS server.

When there is no domain name associated with the identified domain name, the DNS precaching unit 1340 may provide the DNS look-up unit 1350 with information indicating that there is no domain name associated with the identified domain name. The DNS look-up unit 1350 may inquire whether the DNS cache unit 1360 stores information on the identified domain name. When the information on the identified domain name is stored, the DNS cache unit 1360 may provide the DNS look-up unit 1350 with information on an address corresponding to the identified domain name. The DNS look-up unit 1350 may transmit a data request message based on the provided address to the server through the communication unit 1220 without performing DNS signaling. When no information on the identified domain name is stored, the DNS cache unit 1360 may provide the DNS look-up unit 1350 with information indicating that no information on the queried address is stored. In this case, the DNS look-up unit 1350 may transmit a DNS query message to the DNS server to query an address corresponding to the identified domain name.

The electronic device 110 according to various exemplary embodiments of the present disclosure may perform parallel DNS signaling through the logic flow of software illustrated in FIGS. 13A and 13B. The electronic device 110 performs parallel DNS signaling, thereby quickly accessing the Internet.

As described above, an electronic device according to various exemplary embodiments of the present disclosure may include: a controller; an input unit configured to be operatively coupled to the controller; a communication unit configured to be operatively coupled to the controller; and a storage unit configured to be operatively coupled to the controller, wherein the controller may be configured to: detect a first input with respect to a first domain name; detect a second input with respect to a second domain name within a designated interval after the first input is detected; store the second domain name as a domain name associated with the first domain name in a storage unit included in the electronic device, in response to detection of the second input; and perform control to transmit a message for requesting information on an address corresponding to the first domain name and a message for requesting information on an address corresponding to the second domain name to a DNS server in response to detection of a third input with respect to the first domain name.

In some exemplary embodiments, the controller may be further configured to perform control to receive, from the DNS server, a message including information on a first address corresponding to the first domain name and information on an available period of the first address and a message including information on a second address corresponding to the second domain name and information on an available period of the second address. Further, the information on the available period of the first address may include information on time-to-live (TTL) of the first address, and the information on the available period of the second address may include information on TTL of the second address. Further, the information on the first address may be stored in the storage unit during the available period of the first address, and the information on the second address may be stored in the storage unit during the available period of the second address. In addition, the controller may be further configured to: detect a fourth input with respect to the second domain name within the available period of the second address; and perform control to transmit a message for requesting data to a server indicated by the second address stored in the storage unit in response to detection of the fourth input. The controller may be further configured to: detect the fourth input after the available period of the second address; perform control to transmit a message for requesting information on an address corresponding to the second domain name to the DNS server in response to detection of the fourth input; perform control to receive a message including information on a third address corresponding to the second domain name and information on an available period of the third address from the DNS server; and perform control to transmit a message for requesting data from a server indicated by the third address within the available period of the third address.

In some exemplary embodiments, the stored second domain address may be discarded from the storage unit when no input occurs with respect to the second domain name during a predetermined period.

In some exemplary embodiments, the first input may include an input for controlling a first application, and the second input may include an input for controlling a second application that is different from the first application.

In some exemplary embodiments, the controller may be further configured to: perform control to transmit a message for requesting information on an address corresponding to the second domain name to the DNS server in response to detection of the second input; perform control to receive a message including the information on the address corresponding to the second domain name from the DNS server; and perform control to transmit a message for requesting data to a server indicated by the address corresponding to the second domain name.

In some exemplary embodiments, the message for requesting the information on the address corresponding to the first domain name and the message for requesting the information on the address corresponding to the second domain name may be transmitted to the DNS server through a wireless path.

According to the present disclosure, specific operations described as being performed by various types of servers (for example, the DNS server 120, the content server 130, or the like) may be performed by another entity that functions similarly to a server depending on the embodiment. That is, it will be obvious that various operations performed for communication with an electronic device in a network including a plurality of network nodes including a server may be performed by the server or by network nodes other than the server.

Methods according to embodiments stated in claims and/or specifications of the present disclosure may be implemented in hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the present disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-rOM (CD-ROM), digital versatile discs (DVDs), or other type optical storage devices, or a magnetic cassette. Alternatively, any combination of some or all of the may form a memory in which the program is stored. Further, a plurality of such memories may be included in the electronic device.

In addition, the programs may be stored in an attachable storage device which may access the electronic device through communication networks such as the internet, intranet, local area network (LAN), wide 1AN (WLAN), and storage area network (SAN) or a combination thereof. Such a storage device may access the electronic device via an external port. Further, a separate storage device on the communication network may access a portable electronic device.

In the above-described detailed embodiments of the present disclosure, a component included in the present disclosure is expressed in the singular or the plural according to a presented detailed embodiment. However, the singular form or plural form is selected for convenience of description suitable for the presented situation, and various embodiments of the present disclosure are not limited to a single element or multiple elements thereof. Further, either multiple elements expressed in the description may be configured into a single element or a single element in the description may be configured into multiple elements.

While the present disclosure has been shown and described with reference to certain embodiments thereof, it will be understood by those skilled in the art that various changes in form and details may be made therein without departing from the scope of the present disclosure. Therefore, the scope of the present disclosure should not be defined as being limited to the embodiments, but should be defined by the appended claims.

Although the present disclosure has been described with an exemplary embodiment, various changes and modifications may be suggested to one skilled in the art. It is intended that the present disclosure encompass such changes and modifications that are within the scope of the appended claims.

**Claims**

1. A method of operating an electronic device (110), the method comprising:

   detecting a first input with respect to a first domain name;
   detecting a second input with respect to a second domain name within a designated interval after the first input is detected;
   storing the second domain name as a domain name associated with the first domain name in a storage unit comprised in the electronic device (110), in response to detection of the second input; and
   transmitting a message for requesting information on an address corresponding to the first domain name and a message for requesting information on an address corresponding to the second domain name to a domain name system, DNS, server (120) in response to detection of a third input with respect to the first domain name.

2. The method of claim 1, further comprising receiving, from the DNS server (120), a message comprising information on a first address corresponding to the first domain name and information on an available period of the first address and a message comprising information on a second address corresponding to the second domain name and information on an available period of the second address.

3. The method of claim 2, wherein the information on the available period of the first address comprises information on a time-to-live, TTL, of the first address, and the information on the available period of the second address comprises information on a TTL of the second address.

4. The method of claim 2, further comprising:

   storing the information on the first address in the storage unit during the available period of the first address, and
   storing the information on the second address in the storage unit during the available period of the second address.

5. The method of claim 4, further comprising:

   detecting a fourth input with respect to the second domain name within the available period of the second address; and
   transmitting a message for requesting data to a server (130) indicated by the second address stored in the storage unit in response to detection of the fourth input.

6. The method of claim 4, further comprising:

   detecting a fourth input with respect to the second domain name after the available period of the second address;
   transmitting a message for requesting information on an address corresponding to the second domain name to the DNS server (120) in response to detection of the fourth input;
   receiving a message comprising information on a third address corresponding to the second domain name and information on an available period of the third address from the DNS server (120); and
   transmitting a message for requesting data from a server (130) indicated by the third address within the available period of the third address.

7. The method of claim 1, further comprising discarding the stored second domain name from the storage unit when no input occurs with respect to the second domain name during a predetermined period or when a frequency at which an input occurs with respect to the second domain name during the predetermined period is less than a threshold.

8. The method of claim 1, wherein the first input comprises an input for controlling a first application, and the second input comprises an input for controlling a second application that is different from the first application.

9. The method of claim 1, further comprising:

   transmitting a message for requesting information on an address corresponding to the second domain name to the DNS server (120) in response to detection of the second input;
   receiving a message comprising the information on the address corresponding to the second domain name from the DNS server (120); and
   transmitting a message for requesting data to a server (130) indicated by the address corresponding to the second domain name.

10. The method of claim 1, further comprising: transmitting to the DNS server (120) through a wireless path the message for requesting the information on the address corresponding to the first domain name and the message for requesting the information on the address corresponding to the second domain.

11. An electronic device (110) comprising:

a processor (1230);a communication unit (1220) configured to be operatively coupled to the processor (1230); and

a storage unit (1240) configured to be operatively coupled to the processor (1230),

wherein the processor (1230) is configured to:

detect a first input with respect to a first domain name;

detect a second input with respect to a second domain name within a designated interval after the first input is detected;

store the second domain name as a domain name associated with the first domain name in a storage unit (1240) comprised in the electronic device (110), in response to detection of the second input; and

transmit a message for requesting information on an address corresponding to the first domain name and a message for requesting information on an address corresponding to the second domain name to a domain name system, ,DNS, server (120) in response to detection of a third input with respect to the first domain name.

12. The electronic device (110) of claim 11, wherein the processor (1230) is further configured to receive, from the DNS server (120), a message comprising information on a first address corresponding to the first domain name and information on an available period of the first address and a message comprising information on a second address corresponding to the second domain name and information on an available period of the second address.

13. The electronic device of claim 12, wherein the information on the available period of the first address comprises information on a time-to-live, TTL, of the first address, and the information on the available period of the second address comprises information on a TTL of the second address.

14. The electronic device (110) of claim 12, wherein the processor (1230) is further configured to store the information on the first address in the storage unit (1240) during the available period of the first address, and store the information on the second address in the storage unit (1240) during the available period of the second address.

15. The electronic device (110) of claim 14, wherein the processor (1230) is further configured to:

detect a fourth input with respect to the second domain name within the available period of the second address; and

transmit a message for requesting data to a server (130) indicated by the second address stored in the storage unit (1240) in response to detection of the fourth input.

**Patentansprüche**

1. Verfahren zum Betreiben einer elektronischen Vorrichtung (110), wobei das Verfahren umfasst:

Detektieren einer ersten Eingabe bezüglich eines ersten Domain-Namens;

Detektieren einer zweiten Eingabe bezüglich eines zweiten Domain-Namens innerhalb eines bezeichneten Intervalls nach dem Detektieren der ersten Eingabe;

Speichern des zweiten Domain-Namens als einen mit dem ersten Domain-Namen verknüpften Domain-Namen in einer in der elektronischen Vorrichtung (110) eingeschlossenen Speichereinheit als Antwort auf das Detektieren der zweiten Eingabe; und

Senden einer Nachricht zum Anfordern von Informationen über eine Adresse, die dem ersten Domain-Namen entspricht, und einer Nachricht zum Anfordern von Informationen über eine Adresse, die dem zweiten Domain-Namen entspricht, an einen Domain-Name-System-Server, DNS-Server, (120) als Antwort auf das Detektieren einer dritten Eingabe bezüglich des ersten Domain-Namens.

2. Verfahren nach Anspruch 1, ferner umfassend das Empfangen, aus dem DNS-Server (120), einer Nachricht, die Informationen über eine erste Adresse, die dem ersten Domain-Namen entspricht, und Informationen über eine verfügbare Periode der ersten Adresse umfasst, und einer Nachricht, die Informationen über eine zweite Adresse, die dem zweiten Domain-Namen entspricht, und Informationen über eine verfügbare Periode der zweiten Adresse umfasst.

3. Verfahren nach Anspruch 2, wobei die Informationen über die verfügbare Periode der ersten Adresse Informationen über eine Lebenszeit, TTL, der ersten Adresse umfassen und die Informationen über die verfügbare Periode der zweiten Adresse Informationen über eine TTL der zweiten Adresse umfassen.

4. Verfahren nach Anspruch 2, ferner umfassend:

Speichern der Informationen über die erste Adresse in der Speichereinheit während der verfügbaren Periode der ersten Adresse und Speichern der Informationen über die zweite Adresse in der Speichereinheit während der verfügbaren Periode der zweiten Adresse.

5. Verfahren nach Anspruch 4, ferner umfassend:

Detektieren einer vierten Eingabe bezüglich des zweiten Domain-Namens innerhalb der verfügbaren Periode der zweiten Adresse; und Senden einer Nachricht zum Anfordern von Daten an einen durch die in der Speichereinheit gespeicherte zweite Adresse angegebenen Server (130) als Antwort auf das Detektieren der vierten Eingabe.

6. Verfahren nach Anspruch 4, ferner umfassend:

Detektieren einer vierten Eingabe bezüglich des zweiten Domain-Namens nach der verfügbaren Periode der zweiten Adresse; Senden einer Nachricht zum Anfordern von Informationen über eine Adresse, die dem zweiten Domain-Namen entspricht, an den DNS-Server (120) als Antwort auf das Detektieren der vierten Eingabe; Empfangen, aus dem DNS-Server (120), einer Nachricht, die Informationen über eine dritte Adresse, die dem zweiten Domain-Namen entspricht, und Informationen über eine verfügbare Periode der dritten Adresse umfasst; und Senden einer Nachricht zum Anfordern von Daten aus einem durch die dritte Adresse angegebenen Server (130) innerhalb der verfügbaren Periode der dritten Adresse.

7. Verfahren nach Anspruch 1, ferner umfassend das Löschen des gespeicherten zweiten Domain-Namens aus der Speichereinheit, wenn keine Eingabe bezüglich des zweiten Domain-Namens während einer vorgegebenen Periode erfolgt oder wenn eine Häufigkeit, mit der eine Eingabe bezüglich des zweiten Domain-Namens während der vorgegebenen Periode erfolgt, geringer als ein Schwellenwert ist.

8. Verfahren nach Anspruch 1, wobei die erste Eingabe eine Eingabe zum Steuern einer ersten Anwendung umfasst und die zweite Eingabe eine Eingabe zum Steuern einer zweiten Anwendung, die sich von der ersten Anwendung unterscheidet, umfasst.

9. Verfahren nach Anspruch 1, ferner umfassend:

Senden einer Nachricht zum Anfordern von Informationen über eine Adresse, die dem zweiten Domain-Namen entspricht, an den DNS-Server (120) als Antwort auf das Detektieren der zweiten Eingabe; Empfangen einer Nachricht, die die Informationen über die Adresse, die dem zweiten Domain-Namen entspricht, umfasst, aus dem DNS-Server (120); und Senden einer Nachricht zum Anfordern von Daten an einen durch die dem zweiten Domain-Namen entsprechende Adresse angegebenen Server (130).

10. Verfahren nach Anspruch 1, ferner umfassend: Senden, an den DNS-Server (120) über einen drahtlosen Weg, der Nachricht zum Anfordern der Informationen über die Adresse, die dem ersten Domain-Namen entspricht, und der Nachricht zum Anfordern der Informationen über die Adresse, die dem zweiten Domain-Namen entspricht.

11. Elektronische Vorrichtung (110), umfassend:

einen Prozessor (1230); eine Kommunikationseinheit (1220), die so konfiguriert ist, dass sie mit dem Prozessor (1230) in Wirkverbindung steht; und eine Speichereinheit (1240), die so konfiguriert ist, dass sie mit dem Prozessor (1230) in Wirkverbindung steht, wobei der Prozessor (1230) so konfiguriert ist, dass er: eine erste Eingabe bezüglich eines ersten Domain-Namens detektiert;

eine zweite Eingabe bezüglich eines zweiten Domain-Namens innerhalb eines bezeichneten Intervalls nach dem Detektieren der ersten Eingabe detektiert; den zweiten Domain-Namen als einen mit dem ersten Domain-Namen verknüpften Domain-Namen in einer in der elektronischen Vorrichtung (110) eingeschlossenen Speichereinheit (1240) als Antwort auf das Detektieren der zweiten Eingabe speichert; und eine Nachricht zum Anfordern von Informationen über eine Adresse, die dem ersten Domain-Namen entspricht, und eine Nachricht zum Anfordern von Informationen über eine Adresse, die dem zweiten Domain-Namen entspricht, an einen Domain-Name-System-Server, DNS-Server, (120) als Antwort auf das Detektieren einer dritten Eingabe bezüglich des ersten Domain-Namens sendet.

12. Elektronische Vorrichtung (110) nach Anspruch 11, wobei der Prozessor (1230) ferner so konfiguriert ist, dass er aus dem DNS-Server (120) eine Nachricht, die Informationen über eine erste Adresse, die dem ersten Domain-Namen entspricht, und Informationen über eine verfügbare Periode der ersten Adresse umfasst, und eine Nachricht, die Informationen über eine zweite Adresse, die dem zweiten Domain-Namen entspricht, und Informationen über eine verfügbare Periode der zweiten Adresse umfasst, empfängt.

**13.** Elektronische Vorrichtung nach Anspruch 12, wobei die Informationen über die verfügbare Periode der ersten Adresse Informationen über eine Lebenszeit, TTL, der ersten Adresse umfassen und die Informationen über die verfügbare Periode der zweiten Adresse Informationen über eine TTL der zweiten Adresse umfassen.

**14.** Elektronische Vorrichtung (110) nach Anspruch 12, wobei der Prozessor (1230) ferner so konfiguriert ist, dass er die Informationen über die erste Adresse in der Speichereinheit (1240) während der verfügbaren Periode der ersten Adresse speichert und die Informationen über die zweite Adresse in der Speichereinheit (1240) während der verfügbaren Periode der zweiten Adresse speichert.

**15.** Elektronische Vorrichtung (110) nach Anspruch 14, wobei der Prozessor (1230) ferner so konfiguriert ist, dass er:

eine vierte Eingabe bezüglich des zweiten Domain-Namens innerhalb der verfügbaren Periode der zweiten Adresse detektiert; und eine Nachricht zum Anfordern von Daten an einen durch die in der Speichereinheit (1240) gespeicherte zweite Adresse angegebenen Server (130) als Antwort auf das Detektieren der vierten Eingabe sendet.

## Revendications

**1.** Procédé pour exploiter un dispositif électronique (110), le procédé comprenant :

détecter une première entrée relative à un premier nom de domaine ; détecter une deuxième entrée relative à un deuxième nom de domaine dans un intervalle désigné après que la première entrée a été détectée ; enregistrer le deuxième nom de domaine comme un nom de domaine associé avec le premier nom de domaine dans une unité de stockage comprise dans le dispositif électronique (110), en réponse à la détection de la deuxième entrée ; et transmettre un message pour demander des informations sur une adresse correspondant au premier nom de domaine et un message pour demander des informations sur une adresse correspondant au deuxième nom de domaine à un serveur de système de noms de domaine, DNS (120), en réponse à la détection d'une troisième entrée relative au premier nom de domaine.

**2.** Procédé selon la revendication 1, comprenant en outre recevoir, par le serveur DNS (120), un message comprenant des informations sur une première adresse correspondant au premier nom de domaine et des informations sur une période disponible de la première adresse et un message comprenant des informations sur une deuxième adresse correspondant au deuxième nom de domaine et des informations sur une période disponible de la deuxième adresse.

**3.** Procédé selon la revendication 2, les informations sur la période disponible de la première adresse comprenant des informations sur un temps de vie, TTL, de la première adresse, et les informations sur la période disponible de la deuxième adresse comprenant des informations sur un TTL de la deuxième adresse.

**4.** Procédé selon la revendication 2, comprenant en outre :

enregistrer les informations sur la première adresse dans l'unité de stockage pendant la période disponible de la première adresse et enregistrer les informations sur la deuxième adresse dans l'unité de stockage pendant la période disponible de la deuxième adresse.

**5.** Procédé selon la revendication 4, comprenant en outre :

détecter une quatrième entrée relative au deuxième nom de domaine dans la période disponible de la deuxième adresse ; et transmettre un message pour demander des données à un serveur (130) indiqué par la deuxième adresse enregistrée dans l'unité de stockage en réponse à la détection de la quatrième entrée.

**6.** Procédé selon la revendication 4, comprenant en outre :

détecter une quatrième entrée relative au deuxième nom de domaine après la période disponible de la deuxième adresse ; transmettre un message pour demander des informations sur une adresse correspondant au deuxième nom de domaine au serveur DNS (120) en réponse à la détection de la quatrième entrée ;

recevoir, par le serveur DNS (120), un message comprenant des informations sur une troisième adresse correspondant au deuxième nom de domaine et des informations sur une période disponible de la troisième adresse ; et transmettre un message pour demander des données à un serveur (130) indiqué par la troisième adresse dans la période disponible de la troisième adresse.

**7.** Procédé selon la revendication 1, comprenant en outre éliminer le deuxième nom de domaine enregistré de l'unité de stockage lorsque aucune entrée ne se produit relativement au deuxième nom de domaine pendant une période prédéterminée ou lorsqu'une fréquence à laquelle une entrée se produit relativement au deuxième nom de domaine pendant la période prédéterminée est inférieure à un seuil.

**8.** Procédé selon la revendication 1, la première entrée comprenant une entrée pour contrôler une première application, et la deuxième entrée comprenant une entrée pour contrôler une deuxième application qui est différente de la première application.

**9.** Procédé selon la revendication 1, comprenant en outre :

transmettre un message pour demander des informations sur une adresse correspondant au deuxième nom de domaine au serveur DNS (120) en réponse à la détection de la deuxième entrée ;
recevoir, par le serveur DNS (120), un message comprenant des informations sur l'adresse correspondant au deuxième nom de domaine ; et transmettre un message pour demander des données à un serveur (130) indiqué par l'adresse correspondant au deuxième nom de domaine.

**10.** Procédé selon la revendication 1, comprenant en outre:
transmettre au serveur DNS (120) par voie sans fil le message pour demander des informations sur l'adresse correspondant au premier nom de domaine et le message pour demander des informations sur l'adresse correspondant au deuxième domaine.

**11.** Dispositif électronique (110) comprenant :

un processeur (1230) ; une unité de communication (1220) conçue pour être couplée de façon opérationnelle au processeur (1230) ; et une unité de stockage (1240) conçue pour être couplée de façon opérationnelle au processeur (1230),
le processeur (1230) étant conçu pour :
détecter une première entrée relative à un premier nom de domaine ;

détecter une deuxième entrée relative à un deuxième nom de domaine dans un intervalle désigné après que la première entrée a été détectée ;
enregistrer le deuxième nom de domaine comme un nom de domaine associé avec le premier nom de domaine dans une unité de stockage (1240) comprise dans le dispositif électronique (110), en réponse à la détection de la deuxième entrée ; et transmettre un message pour demander des informations sur une adresse correspondant au premier nom de domaine et un message pour demander des informations sur une adresse correspondant au deuxième nom de domaine à un serveur de système de noms de domaine, DNS (120), en réponse à la détection d'une troisième entrée relative au premier nom de domaine.

**12.** Dispositif électronique (110) selon la revendication 11, le processeur (1230) étant en outre conçu pour recevoir, par le serveur DNS (120), un message comprenant des informations sur une première adresse correspondant au premier nom de domaine et des informations sur une période disponible de la première adresse et un message comprenant des informations sur une deuxième adresse correspondant au deuxième nom de domaine et des informations sur une période disponible de la deuxième adresse.

**13.** Dispositif électronique selon la revendication 12, les informations sur la période disponible de la première adresse comprenant des informations sur un temps de vie, TTL, de la première adresse, et les informations sur la période disponible de la deuxième adresse comprenant des informations sur un TTL de la deuxième adresse.

**14.** Dispositif électronique (110) selon la revendication 12, le processeur (1230) étant en outre conçu pour enregistrer les informations sur la première adresse dans l'unité de stockage (1240) pendant la période disponible de la première adresse, et enregistrer les informations sur la deuxième adresse dans l'unité de stockage (1240) pendant la période disponible de la deuxième adresse.

**15.** Dispositif électronique (110) selon la revendication 14, le processeur (1230) étant en outre conçu pour :

détecter une quatrième entrée relative au deuxième nom de domaine dans la période disponible de la deuxième adresse ; et

transmettre un message pour demander des données à un serveur (130) indiqué par la deuxième adresse enregistrée dans l'unité de stockage (1240) en réponse à la détection de la quatrième entrée.

[Fig. 1]

EP 3 494 688 B1

[Fig. 2]

EP 3 494 688 B1

**205** (mobile screen)

- news entertainment sports webtoon·fun
- Steaming-hot today, 35°C in Daegu
- most popular keywords 7 Sully ↑ 138
- "Hillary Clinton should be the next president"
- What is the difference between Pyongyang Naengmyeon and Hamheung Naengmyeon?
- 29° Microdust concentration 37 (normal), Sajik-dong, Seoul
- Politics | Economy | Society
- Life | World | IT
- IS has committed terrorist attacks in 29 countries in the past

**210** (mobile screen)

- news | entertainment | sports
- home Politics Economy Society IT Life World
- Finance | Stock | Real estate
- Real GDP in the second quarter 2016
- Recovery in consumption, investment, and export, steady-low growth
- [Interview] BOK "the economy this year···, ○○○
- 0% growth for three consecutive quarters ···, △△△
- 0% growth for three consecutive quarters ···, ☆☆☆
- By issue
- KOSPI 2,022.23 | KOSDAQ 704.78

**110 Electronic device** · **120 DNS server** · **130 Content server**

Detecting FQDN — S210

S220 — Is address corresponding to FQDN stored?

Yes

No

DNS query message [FQDN] — S230

DNS response message [address] — S240

Data request message — S250

Data response message — S260

Displaying data — S270

**215**

| Header | Question | Answer | Authority | Additional Info. |
|---|---|---|---|---|

[Fig. 3]

EP 3 494 688 B1

30

[Fig. 4]

EP 3 494 688 B1

110
405
110
410
110
415

search   alphabetical   edit

phone  messages  camera  settings

news  entertainment  sports  webtoon·fun
Steaming-hot today, 35°C in Daegu
most popular keywords   7 Sully ↑ 138
"Hillary Clinton should be the next president"
What is the difference between Pyongyang Naengmyeon and Hamheung Naengmyeon?
29°  Microdust concentration 37 (normal), Sajik-dong, Seoul
Politics   Econo   Society
Life   Worl   IT
IS has committed ter...ks in 29 countries in the past...rs

news | entertainment | sports
home  Politics  Economy  Society  IT  Life  World
Finance  |  Stock  |  Real estate
Real GDP in the second quarter 2016
Recovery in consumption, investment, and export, steady-low growth
[Interview] BOK "the economy this year···, ○○○
0% growth for three consecutive quarters ···, △△△
0% growth for three consecutive quarters ···, ☆☆☆
By issue
KOSPI 2,022.23 | KOSDAQ 704.78

418  420  422  424  426  428  430  432  434  436  438  440

a   b

Detecting input #1
Trasmitting DNS query message #1 and DNS query message #2
Receiving DNS response message #1
Receiving DNS response message #2
Trasmitting data request message #1
Receiving data response message #1
Detecting input #2
Trasmitting data request message #2
Receiving data response message #2

[Fig. 5]

[Fig. 6]

```
                    ┌─────────────┐
                    │    START    │
                    └──────┬──────┘
                           │
           ┌───────────────▼───────────────┐
           │ DETECTING FIRST INPUT ON FIRST FQDN │──S610
           └───────────────┬───────────────┘
                           │
           ┌───────────────▼───────────────┐
           │     AFTER DETECTING FIRST INPUT,    │
           │  DETECTING SECOND INPUT ON SECOND   │──S620
           │    FQDN IN DESIGNATED INTERVAL      │
           └───────────────┬───────────────┘
                           │
                        S630
                  ╱──────────────╲
                 ╱  IS SECOND FQDN AS ╲        YES
                ╱ FQDN ASSOCIATED WITH FIRST╲──────────┐
                ╲    FQDN STORED?    ╱                  │
                 ╲──────────────────╱                   │
                        │ NO                            │
                        │                               │
         S640           │                          S650 │
   ┌────────────────────▼──────────┐    ┌───────────────▼──────────────┐
   │  STORING SECOND FQDN AS FQDN   │    │ UPDATING INFORMATION REGARDING│
   │   ASSOCIATED WITH FIRST FQDN   │    │         SECOND FQDN           │
   └────────────────────┬──────────┘    └───────────────┬──────────────┘
                        │                               │
                        │◄──────────────────────────────┘
                 ┌──────▼──────┐
                 │     END     │
                 └─────────────┘
```

[Fig. 7A]

START

DETECTING FIRST INPUT ON FIRST FQDN  — S710

AFTER DETECTING FIRST INPUT, DETECTING SECOND INPUT ON SECOND FQDN IN DESIGNATED INTERVAL  — S712

IS SECOND INPUT DETECTED IN FIRST INTERVAL?  — S714

NO →

IS SECOND INPUT DETECTED IN SECOND INTERVAL?  — S718

NO →

STORING SECOND FQDN AS FQDN ASSOCIATED WITH FIRST FQDN IN REGION FOR THIRD INTERVAL  — S722

YES ↓

STORING SECOND FQDN AS FQDN ASSOCIATED WITH FIRST FQDN IN REGION FOR SECOND INTERVAL  — S720

YES ↓

STORING SECOND FQDN AS FQDN ASSOCIATED WITH FIRST FQDN IN REGION FOR FIRST INTERVAL  — S716

END

EP 3 494 688 B1

[Fig. 7B]

35

[Fig. 8]

```
                        ┌──────────────┐
                        │    START     │
                        └──────┬───────┘
                               │
                               ▼            S810
                          ╱─────────╲
                        ╱    HAS      ╲
                      ╱ SECOND FQDN STORED AS ╲
                    ╱ FQDN ASSOCIATED WITH FIRST ╲  YES
                    ╲  FQDN BEEN USED DURING    ╱─────────┐
                      ╲  PREDETERMINED   ╱                │
                        ╲  PERIOD?  ╱                      │
                          ╲───────╱                        │
                              │ NO                         │
                              ▼           S820             ▼           S830
        ┌───────────────────────────────┐    ┌───────────────────────────────┐
        │ DISCARDING SECOND FQDN STORED │    │ MAINTAINING TO STORE SECOND   │
        │ AS FQDN ASSOICATED WITH FIRST FQDN │ │ FQDN AS FQDN ASSOCIATED WITH  │
        │                               │    │          FIRSRFQDN            │
        └───────────────┬───────────────┘    └───────────────┬───────────────┘
                        │◄───────────────────────────────────┘
                        ▼
                  ┌──────────┐
                  │   END    │
                  └──────────┘
```

[Fig. 9A]

EP 3 494 688 B1

```
                    ┌─────────────┐
                    │    START    │
                    └──────┬──────┘
                           ▼
          ┌────────────────────────────────┐
          │ DETECTING FIRST INPUT ON FIRST  │ ∼S910
          │            FQDN                  │
          └───────────────┬────────────────┘
                          ▼
          ┌────────────────────────────────┐
          │   AFTER DETECTING FIRST INPUT,  │
          │  DETECTING SECOND INPUT ON SECOND│ ∼S912
          │  FQDN IN DESIGNATED INTERVAL    │
          └───────────────┬────────────────┘
                          ▼
                       S914                          S918
              ◇ ARE FIRST INPUT ◇      NO   ◇ ARE FIRST INPUT ◇      NO
              ◇ AND SECOND INPUT CAUSED BY ─────► ◇ AND SECOND INPUT CAUSED BY ─────────┐
              ◇    FIRST USER?   ◇            ◇    SECOND USER?  ◇                       │
                      │ YES                           │ YES                             │
                      ▼              S916             ▼              S920                ▼              S922
          ┌────────────────────────┐   ┌────────────────────────┐   ┌────────────────────────┐
          │ STORING SECOND FQDN AS FQDN│   │ STORING SECOND FQDN AS FQDN│   │ STORING SECOND FQDN AS FQDN│
          │ ASSOCIATED WITH FIRST FQDN IN│   │ ASSOCIATED WITH FIRST FQDN IN│   │ ASSOCIATED WITH FIRST FQDN IN│
          │  REGION FOR FIRST USER  │   │  REGION FOR SECOND USER │   │  REGION FOR THIRD USER  │
          └───────────┬────────────┘   └───────────┬────────────┘   └───────────┬────────────┘
                      ▼◄───────────────────────────┴────────────────────────────┘
                 ┌─────────┐
                 │   END   │
                 └─────────┘
```

[Fig. 9B]

[Fig. 10]

[Fig. 11A]

[Fig. 11B]

[Fig. 12]

[Fig. 13A]

[Fig. 13B]

**EP 3 494 688 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015195243 A1

- US 2012084343 A1

### Non-patent literature cited in the description

- Proactive caching of DNS records: addressing a performance bottleneck. **COHEN E et al.** PROCEEDINGS OF SAINT 2001 SYMPOSIUM ON APPLICATIONS AND THE INTERNET. IEEE COMPUTER SOCIETY, 08 January 2001, 85-94